# EUROPEAN PATENT APPLICATION

(11) **EP 4 817 850 A1**
(43) Date of publication of application: **07.10.2026**
(21) Application number: 24896662.4
(22) Date of filing: 28.11.2024
(51) Int. Cl.: B29C 64/314, B29C 64/295, B33Y 40/10, B33Y 30/00

(54) **MELTING ASSEMBLY, MELTING ASSEMBLY AND HEATING STRUCTURE FOR MELTING 3D PRINTING CONSUMABLE, AND 3D PRINTER**

(30) Priority: 30.11.2023 CN 202311630826; 29.09.2024 CN 202422396155 U
(71) Applicant: Zhengzhou Suzao Technology Co., Ltd., Zhengzhou, Henan 450048 (CN)
(72) Inventor: SHEN, Kang, Zhengzhou, Henan 450000 (CN); WANG, Qindong, Zhengzhou, Henan 450000 (CN); DUAN, Zhihui, Zhengzhou, Henan 450000 (CN); YUE, Liuyang, Zhengzhou, Henan 450000 (CN); CHENG, Shuo, Zhengzhou, Henan 450000 (CN)
(74) Representative: Gregorj S.r.l.
(86) International application number: PCT/CN2024/135339
(87) International publication number: WO 2025/113577

(57) **Abstract**

A melting assembly and heating structure for melting a 3D printing consumable, and a 3D printer. The melting assembly comprises: a heat conduction member, at least one flow channel configured to guide a consumable being formed inside the heat conduction member, an accommodating groove being further formed in the heat conduction member, and the accommodating groove being communicated with the flow channel; and an insertion member disposed in the accommodating groove and connected to the heat conduction member, wherein a first gap configured to achieve the pressing of the consumable is formed between at least part of the insertion member and the peripheral wall of the accommodating groove. By forming the gap, on one hand, the flow distance of the consumable in a body can be increased, i.e., heating time is prolonged; on the other hand, the heat conduction member presses the consumable through the gap, so that the thermal contact distance of the axis of the consumable can be reduced; in addition, compared with a linear flow channel, the gap can increase the thermal contact area of the consumable, thereby facilitating the melting of the consumable.

## Description

### CROSS-REFERENCE TO THE RELATED APPLICATIONS

The present invention claims priority to Chinese Patent Application No. 2023116308261, entitled "MELTING ASSEMBLY FOR MELTING 3D PRINTING CONSUMABLE, AND 3D PRINTER" filed with the China National Intellectual Property Administration on November 30, 2023, and Chinese Patent Application No. 2024223961553, entitled "NOZZLE ASSEMBLY AND 3D PRINTER," filed with the China National Intellectual Property Administration on September 29, 2024, the entire contents of which are incorporated herein by reference.

### TECHNICAL FIELD

The present invention relates to the field of 3D printing technology, and specifically, to a melting assembly, a melting assembly and a heating structure for melting a 3D printing filament (consumable), and a 3D printer.

### BACKGROUND

With the increasingly mature development of 3D printing technology, the speed of 3D printers is also continuously improving. In order to meet the requirements of high-speed and high-quality printing effects, the melting technology of conventional nozzles can no longer satisfy the demands of high-speed printing.

In the prior art, the thermal conductivity of a filament is generally below 1 W/m·K. For the melting of the filament, in most cases, the melting rate of the filament is increased by increasing the number of flow channels in a nozzle or a heating block or by extending the length of the flow channels, thereby increasing the contact area between the filament and the heating block or the nozzle. However, in both of the above solutions, extending the length of the flow channels causes the overall structure to be lengthened, which is inconvenient for installation, and the lengthened heating block or nozzle results in poor torque resistance; increasing the contact area still leaves the problem of low filament melting speed for the heating of the filament core, which cannot meet the demand for filament melting during high-speed printing.

### SUMMARY

A technical problem to be solved by the present invention is to provide a melting assembly, a melting assembly and a heating structure for melting a 3D printing filament, and a 3D printer, which are capable of pressing a filament, thereby further improving the melting rate of the filament.

In order to solve the above technical problem, the present invention adopts the following technical solutions.

In a first aspect, the present invention provides a melting assembly for melting a 3D printing filament, comprising:
a heat conduction member, wherein at least one flow channel configured to guide a filament is provided inside the heat conduction member, an accommodating groove is further provided in the heat conduction member, and the accommodating groove is communicated with the flow channel; and
an insertion member disposed in the accommodating groove and connected to the heat conduction member,
wherein a first gap configured to press the filament is provided between at least part of the insertion member and a peripheral wall of the accommodating groove.

Optionally, the heat conduction member is further provided with an outlet configured to guide the pressed filament to flow out, and an axis of the outlet and an axis of the flow channel are disposed in a mutually offset manner; or
the axis of the outlet and the axis of the flow channel are disposed coaxially.

Optionally, an axis of the accommodating groove and the axis of the flow channel are disposed at an angle.

Optionally, the insertion member comprises an insertion section configured to be inserted into the accommodating groove, and at least part of the insertion section and a groove wall of the accommodating groove form the gap; and
the insertion section abuts against one end of the accommodating groove; or the insertion section is spaced apart from one end of the accommodating groove.

Optionally, the flow channel comprises at least two first sub-flow channels and one second sub-flow channel, the first sub-flow channels are disposed along a circumferential direction of the second sub-flow channel, and
a cross-sectional area of the second sub-flow channel is smaller than a cross-sectional area of the first sub-flow channel.

Optionally, the first sub-flow channel is communicated with the second sub-flow channel.

Optionally, the melting assembly further comprises a heating sheet, and the heating sheet is attached to an outer surface of the heat conduction member.

Optionally, a plurality of flow channels are provided.

Optionally, the insertion member is a heating rod.

In a second aspect, the present invention provides a melting assembly, the melting assembly comprising:
a heat conduction member, wherein the heat conduction member is provided with a through-type heating flow channel configured to convey a filament, the heating flow channel has a preheating flow channel and a flow channel, and the preheating flow channel and the flow channel are sequentially communicated in a conveying direction;
the flow channel has a pair of wall surfaces disposed opposite to each other, a distance between the pair of wall surfaces is smaller than a diameter of the filament, and a cross-sectional area of the flow channel is larger than a cross-sectional area of the filament.

Optionally, at least one end of the flow channel is provided with a guide hole channel, and the guide hole channel is configured to guide the filament through the heating flow channel.

Optionally, the wall surfaces and an extending direction of the preheating flow channel are disposed in an intersecting manner.

Optionally, the wall surfaces and the extending direction of the preheating flow channel are disposed in a parallel manner.

Optionally, in the conveying direction, the preheating flow channel has a guide section and a stripping section connected in sequence, and the stripping section is communicated with the flow channel, wherein a cross-sectional area of the guide section gradually decreases in the conveying direction.

Optionally, an inner wall of the preheating flow channel has a plurality of protrusions, the plurality of protrusions are spaced apart from each other along a circumferential direction of the preheating flow channel, and the protrusions extend along the conveying direction, wherein a first sub-flow channel is formed between adjacent protrusions, and a second sub-flow channel is formed between end portions of all the protrusions facing away from the inner wall of the preheating flow channel; a cross-sectional area of the second sub-flow channel gradually decreases; a minimum cross-sectional area of the second sub-flow channel is smaller than the cross-sectional area of the filament, and/or the cross-sectional area of the first sub-flow channel is larger than the cross-sectional area of the second sub-flow channel.

In a third aspect, the present invention provides a heating structure for melting a 3D printing filament, comprising: a body, a flow channel, a gap, and an outlet, wherein
the flow channel, the gap, and the outlet are all disposed inside the body and are sequentially communicated; and
a spacing of the gap is smaller than the diameter of the filament, and the filament enters the body from the flow channel, is pressed into a sheet shape at the gap, and flows out of the body from the outlet.

Optionally, the gap comprises a first wall surface and a second wall surface; and the first wall surface and the second wall surface are formed by an inner wall of the body.

Optionally, the body comprises a heat conduction member and an insertion member, wherein the heat conduction member has an accommodating groove, the insertion member is inserted into the accommodating groove and is sealingly connected to the heat conduction member, and the first wall surface and the second wall surface are formed by an inner wall of the accommodating groove and an outer wall of the insertion member.

Optionally, a spacing between the first wall surface and the second wall surface is 0.2 to 0.75 times the diameter of the filament.

Optionally, at least a portion of the first wall surface and the second wall surface is a rectangular plane, an elliptical plane, a rounded rhombic plane, a polygonal plane, an annular surface or a semi-annular surface.

Optionally, the first wall surface and the second wall surface are rounded rhombic planes, the flow channel and the outlet are respectively located at diagonal positions of the rounded rhombic plane, and are perpendicular to the rounded rhombic plane.

Optionally, the heating structure further comprises a flow guide portion, wherein the flow guide portion is disposed between the flow channel and the gap; and/or
the flow guide portion is disposed between the gap and the outlet.

Optionally, the flow channel is configured to preheat the filament, the flow channel comprises a first sub-flow channel and a second sub-flow channel, the first sub-flow channel is communicated with the second sub-flow channel, and the first sub-flow channel is disposed along a circumferential direction of the second sub-flow channel.

Optionally, the flow channel further comprises a transition flow channel, the first sub-flow channel and the second sub-flow channel are both communicated with the transition flow channel, and the filament enters the first sub-flow channel and the second sub-flow channel from the transition flow channel.

In a fourth aspect, the present invention provides a melting assembly for melting a 3D printing filament, the melting assembly comprising the heating structure according to any one of the above, and further comprising a heatbreak and a nozzle, wherein the heatbreak is connected to the body through the flow channel, and the nozzle is connected to the outlet to be connected to the body.

In a fifth aspect, the present invention provides a 3D printer, comprising: the melting assembly according to any one of the above.

The technical solutions of the present invention have the following effects.

The melting assembly provided by the present invention has, in a first aspect, at least one flow channel configured to guide a filament to flow being disposed inside the heat conduction member, and an accommodating groove configured to accommodate the insertion member being further disposed inside the heat conduction member. The accommodating groove is communicated with the flow channel, and a first gap configured to press the filament is provided between the insertion member and a groove peripheral wall of the accommodating groove. When the insertion member transfers heat to the heat conduction member, the heat conduction member and the insertion member can heat the filament in the first gap. When the filament enters the first gap from the flow channel, the filament is heated along a circumferential direction of the first gap, increasing a heating area, and is simultaneously pressed, and the pressed filament can be rapidly melted, thereby improving the melting rate of the filament by the melting assembly and meeting the demand for rapid printing.

For the melting assembly provided by the present invention, in a second aspect, the filament sequentially passes through the flow channel for preheating and the gap for rapid melting. After being preheated at the flow channel, the filament is softened, which facilitates its deformation and entry into the gap; the filament is compressed into a thinner shape at the gap, which can improve the heat conduction effect on the core of the filament; the cross-sectional area of the melting flow channel is larger than the cross-sectional area of the filament, which on one hand increases the contact area between the filament and the body, contributing to improved heat transfer efficiency, and on the other hand reduces the propulsion resistance of the filament, thereby accelerating the melting speed of the filament. This design is particularly suitable for application scenarios requiring high-speed printing and can significantly improve printing speed and efficiency.

For the heating structure provided by the present invention, in a third aspect, the gap is capable of increasing the flow distance of the filament in the body; and the heat conduction member presses the filament through the gap, which can reduce the distance from the axis of the filament to a heat conductor. At the same time, compared with a linear flow channel, the gap can also increase the thermal contact area of the filament, which is conducive to improving the melting rate of the filament and meeting the demand for rapid printing.

### BRIEF DESCRIPTION OF THE DRAWINGS

In order to explain the technical solutions of the embodiments of the present invention more clearly, the drawings required in the embodiments of the present invention will be briefly introduced below. It should be understood that the following drawings only show certain embodiments of the present invention and therefore should not be considered as limiting the scope. For those of ordinary skill in the art, other related drawings can also be obtained from these drawings without creative effort.
FIG. 1 is a schematic three-dimensional structural view of a melting assembly according to a first embodiment of the present invention;
FIG. 2 is a schematic three-dimensional structural view of a heat conduction member according to the first embodiment of the present invention;
FIG. 3 is a schematic top view of the heat conduction member of FIG. 2 of the present invention;
FIG. 4 is a schematic sectional structural view of the melting assembly of FIG. 1 of the present invention;
FIG. 5 is a schematic top view of a heat conduction member according to a second embodiment of the present invention;
FIG. 6 is a schematic sectional structural view of a melting assembly formed by the heat conduction member of FIG. 5 of the present invention;
FIG. 7 is a schematic top view of a heat conduction member according to a third embodiment of the present invention;
FIG. 8 is a schematic sectional structural view of a melting assembly formed by the heat conduction member of FIG. 7 of the present invention;
FIG. 9 is a schematic top view of a heat conduction member according to a fourth embodiment of the present invention;
FIG. 10 is a schematic three-dimensional structural view of a melting assembly according to a fifth embodiment of the present invention;
FIG. 11 is a schematic top view of the melting assembly of FIG. 10 of the present invention;
FIG. 12 is a schematic sectional structural view of the melting assembly of FIG. 10 of the present invention;
FIG. 13 is a schematic sectional structural view of a melting assembly according to a sixth embodiment of the present invention;
FIG. 14 is a schematic top view of a melting assembly according to a seventh embodiment of the present invention;
FIG. 15 is a schematic sectional structural view of the melting assembly of FIG. 14 of the present invention;
FIG. 16 is a schematic sectional structural view of a melting assembly according to an eighth embodiment of the present invention;
FIG. 17 is a schematic sectional structural view of a melting assembly according to a ninth embodiment of the present invention;
FIG. 18 is a schematic sectional structural view of a melting assembly according to a tenth embodiment of the present invention;
FIG. 19 is a schematic sectional structural view of a melting assembly according to an eleventh embodiment of the present invention;
FIG. 20 is a schematic sectional structural view of a melting assembly according to a twelfth embodiment of the present invention;
FIG. 21 is an exploded structural view of a melting assembly according to a thirteenth embodiment of the present invention;
FIG. 22 is a schematic sectional structural view of the melting assembly according to the thirteenth embodiment of the present invention;
FIG. 23 is an exploded structural view of a melting assembly according to a fourteenth embodiment of the present invention;
FIG. 24 is a schematic sectional structural view of the melting assembly according to the fourteenth embodiment of the present invention;
FIG. 25 is a schematic structural view from one perspective of a melting assembly according to a fifteenth embodiment of the present invention (left) and a schematic sectional structural view taken along line A-A thereof (right);
FIG. 26 is a schematic structural view from another perspective of the melting assembly according to the fifteenth embodiment of the present invention (left) and a schematic sectional structural view taken along line B-B thereof (right);
FIG. 27 is a schematic structural view from one perspective of a melting assembly according to a sixteenth embodiment of the present invention (left) and a schematic sectional structural view taken along line C-C thereof;
FIG. 28 is a schematic sectional structural view taken along line D-D of FIG. 27 of the present invention;
FIG. 29 is a schematic structural view from one perspective of a melting assembly according to a seventeenth embodiment of the present invention (left) and a schematic sectional structural view taken along line E-E thereof (right);
FIG. 30 is a schematic structural view from another perspective of the melting assembly according to the seventeenth embodiment of the present invention and a schematic sectional structural view taken along line F-F thereof;
FIG. 31 is a schematic sectional structural view taken along line G-G of FIG. 30 of the present invention; and
FIG. 32 is a schematic structural view of a melting assembly of the prior art.

Reference numerals: 200-body; 1-heat conduction member; 11-flow channel; 111-first sub-flow channel; 112-second sub-flow channel; 113-columnar flow channel; 12-first connecting flow channel; 13-transition flow channel; 14-accommodating groove; 15-outlet; 16-second connecting flow channel; 2-insertion member; 21-insertion section; 22-fixing portion; 23-projection; 3-first gap; 4-second gap; 5-heatbreak; 6-nozzle; 7-plugging member; 210-heating flow channel; 212-gap; 2121-wall surface; 21211-first wall surface; 21212-second wall surface; 213-first flow guide portion; 2131-first connection port; 214-second flow guide portion; 2141-second connection port; 220-protrusion.

### DETAILED DESCRIPTION OF THE EMBODIMENTS

The technical solutions in the embodiments of the present invention will be described below in combination with the drawings in the embodiments of the present invention.

It should be noted that similar reference numerals and letters in the following drawings denote similar items. Therefore, once an item is defined in one drawing, it does not need to be further defined or explained in subsequent drawings. Meanwhile, in the description of the present invention, the terms "first", "second" and the like are only for distinguishing description and cannot be understood as indicating or implying relative importance.

The embodiments of the present invention provide a heating structure for melting a 3D printing filament.

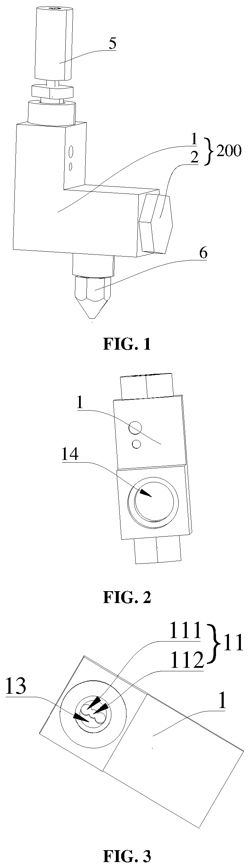

The embodiments of the present invention introduce a heating structure for melting a 3D printing filament. As shown in FIG. 2, FIG. 4 and FIG. 27, the heating structure comprises: a body 200, a flow channel 11, a gap 212, and an outlet 15; the flow channel 11, the gap 212 and the outlet 15 are all disposed inside the body 200 and are sequentially communicated; and the spacing of the gap 212 is smaller than the diameter of the filament, so that when the filament enters the body 200 from the flow channel 11, the filament is pressed into a sheet shape at the gap 212 and flows out of the body 200 from the outlet 15.

It can be understood that, by providing the gap 212 inside the body 200, when the filament flows from the flow channel 11 into the gap 212, the gap 212 can press and heat the filament, pressing the filament into a sheet shape, so that the filament flows along the gap 212, reducing the distance from the axis of the filament to the inner wall of the body 200, that is, reducing the heat conduction distance, so that the axis of the filament is heated more rapidly. Therefore, by providing the gap 212, on one hand, the flow distance of the filament in the body 200 can be increased, that is, the heating time is prolonged; on the other hand, the heat conduction member 1 presses the filament through the surface gap 212, which can reduce the thermal contact distance of the axis of the filament; at the same time, compared with a linear flow channel 11, the gap 212 can also increase the thermal contact area of the filament, all of which are conducive to improving the melting rate of the filament and facilitating the meeting of the demand for rapid printing.

In the present embodiment, the gap 212 is constituted by a first wall surface 21211 and a second wall surface 21212 of the body 200.

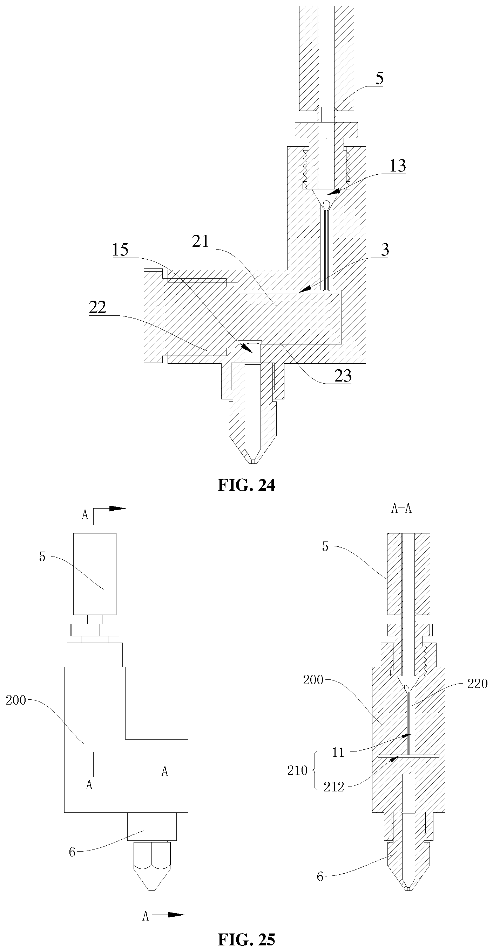

In the present embodiment, as shown in FIG. 25 to FIG. 31, the first wall surface 21211 and the second wall surface 21212 are or at least partially are rectangular planes, elliptical planes, rounded rhombic planes, polygonal planes, or the like.

In some optional embodiments, as shown in FIG. 25 to FIG. 31, the body 200 comprises a heat conduction member 1, and the first wall surface 21211 and the second wall surface 21212 can be formed by the inner wall of the body 200.

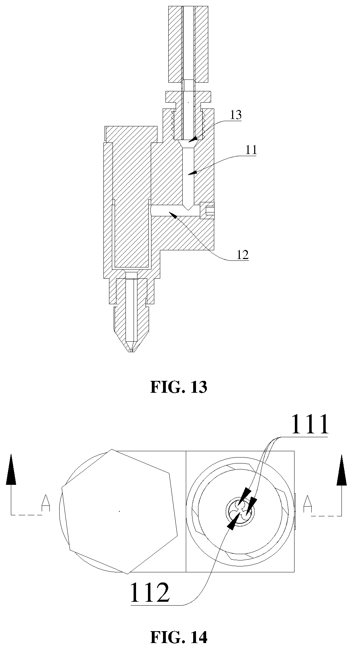

In some optional embodiments, as shown in FIG. 1 to FIG. 24, the body 200 comprises a heat conduction member 1 and an insertion member 2, the first wall surface 21211 and the second wall surface 21212 can be respectively formed by the inner wall of the heat conduction member 1 and the outer wall of the insertion member 2, so as to form annular, semi-annular gap surfaces and the like. Compared with a planar gap surface, the annular or semi-annular gap surface can provide a larger thermal contact surface for the filament. The heat conduction member 1 and the insertion member 2 can be arranged separately or integrally. When the insertion member 2 is arranged separately, it can be directly used as a heat source to directly apply thermal action to the filament.

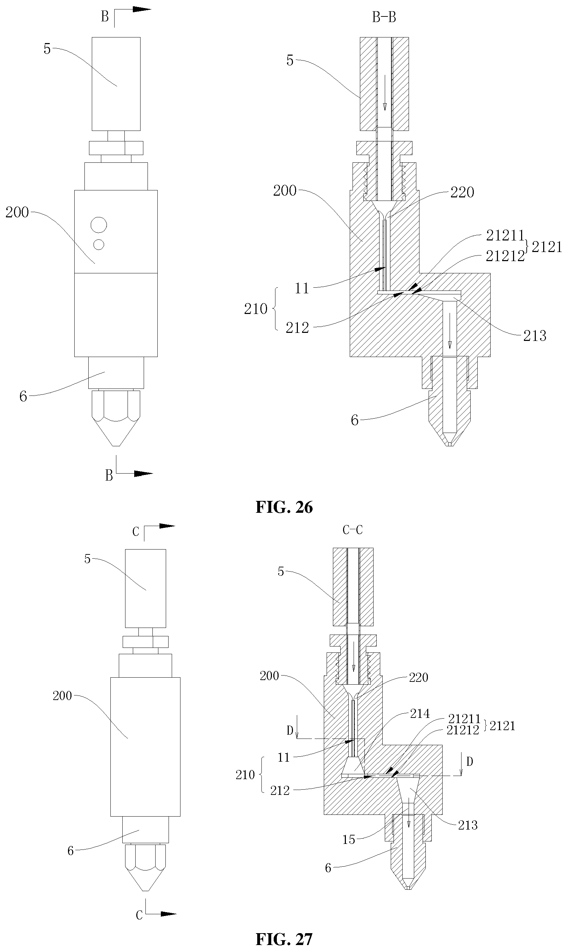

In some optional embodiments, as shown in FIG. 26 and FIG. 27, the gap 212 is disposed along a horizontal direction, that is, the gap 212 intersects the axis of the flow channel 11 and the axis of the outlet 15 perpendicularly, which is conducive to controlling the overall length of the melting assembly, thereby facilitating the control of the stability of the melting assembly during the printing process.

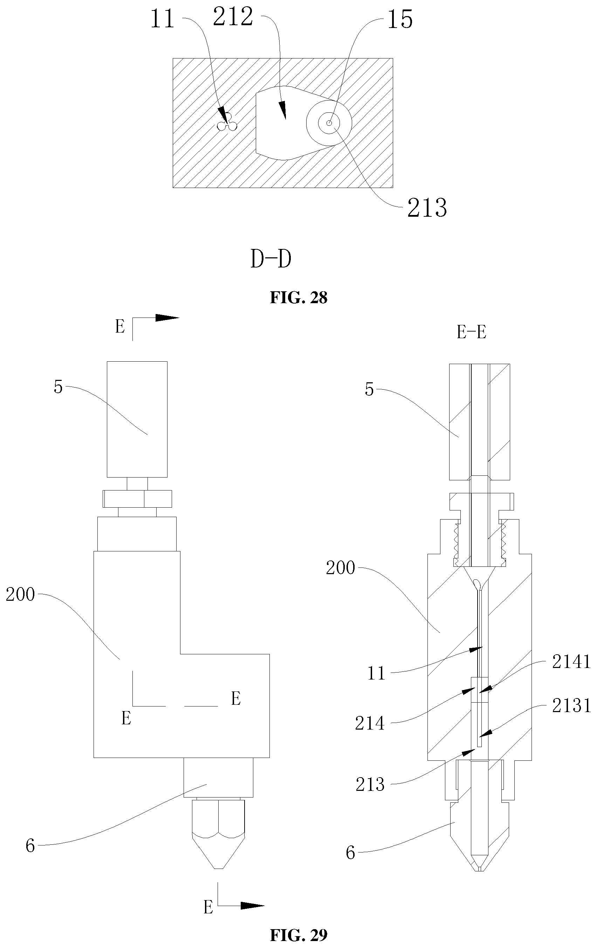

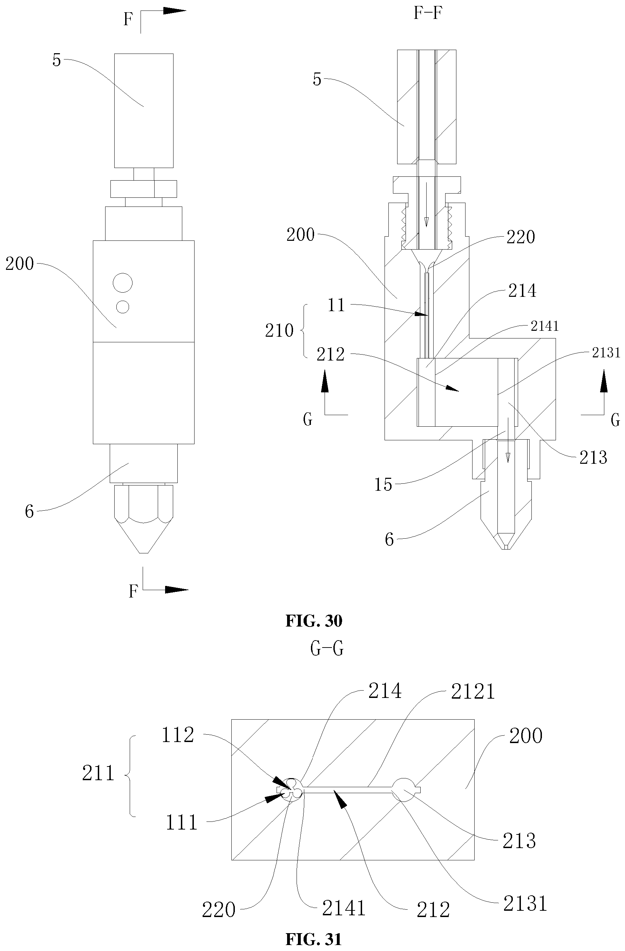

In some optional embodiments, as shown in FIG. 29 and FIG. 30, the gap 212 is disposed along a vertical direction, that is, the gap 212 is disposed in parallel with the extending direction of the flow channel 11 and the extending direction of the outlet 15.

In some other optional embodiments, as shown in FIG. 28, the first wall surface 21211 and the second wall surface 21212 are rounded rhombic planes, the flow channel 11 and the outlet 15 are respectively located at diagonal positions of the rounded rhombic planes and are perpendicular to the rounded rhombic planes, which can reduce flow dead corners formed when the filament flows in the gap 212.

In the present embodiment, as shown in FIG. 3, FIG. 7, FIG. 9, FIG. 28 and FIG. 31, the flow channel 11 is configured to preheat the filament. The flow channel 11 comprises a first sub-flow channel 111 and a second sub-flow channel 112. Further, the first sub-flow channel 111 is communicated with the second sub-flow channel 112, and further the first sub-flow channel 111 is disposed along a circumferential direction of the second sub-flow channel 112.

The quantity of the second sub-flow channel 112 is one; and the quantity of the first sub-flow channels 111 can be set to at least one, optionally two, three, or the like.

Optionally, the cross-sectional area of the second sub-flow channel 112 is smaller than the cross-sectional area of the first sub-flow channel 111.

It can be understood that the preheated filament enters the flow channel 11 composed of the first sub-flow channel 111 and the second sub-flow channel 112, and the first sub-flow channel 111 cooperates with the second sub-flow channel 112 to strip the outer surface of the preheated filament, so that the outer surface of the filament enters the first sub-flow channel 111, while the inner core of the filament receiving less heat can enter the second sub-flow channel 112 for direct heating, thereby improving the melting efficiency of the filament and thus improving the heating efficiency.

In the present embodiment, as shown in FIG. 3, FIG. 4, FIG. 7 to FIG. 9, and FIG. 11 to FIG. 15, the flow channel 11 further comprises a transition flow channel 13, the first sub-flow channel 111 and the second sub-flow channel 112 are both communicated with the transition flow channel 13, and the filament enters the first sub-flow channel 111 and the second sub-flow channel 112 from the transition flow channel 13.

In the present embodiment, as shown in FIG. 27, the heating structure further comprises a flow guide portion, the flow guide portion comprising a first flow guide portion 213 and/or a second flow guide portion 214.

Optionally, the flow guide portion can be disposed between the flow channel 11 and the gap 212. The flow guide portion can be disposed between the gap 212 and the outlet 15. The flow guide portion can also be disposed between the flow channel 11 and the gap 212 and between the gap 212 and the outlet 15.

The embodiments of the present invention further provide a melting assembly for melting a 3D printing filament.

In the present embodiment, as shown in FIG. 1 and FIG. 25, the melting assembly comprises the heating structure, and further comprises a heatbreak 5, wherein the heatbreak 5 is connected to the body 200 through the flow channel 11.

In the present embodiment, the melting assembly further comprises a nozzle 6; and the nozzle 6 is connected to the body 200 through the outlet 15.

The embodiments of the present invention further provide a more specific heating structure and melting assembly for melting a 3D printing filament.

As an embodiment, the body 200 of the heating structure comprises a heat conduction member 1 and an insertion member 2, wherein the gap 212 is a gap enclosed by the inner wall of the heat conduction member 1 and the outer wall of the insertion member 2, and further, the gap can comprise a first gap 3 and a second gap 4.

As shown in FIG. 1 to FIG. 24, the embodiments of the present invention introduce a melting assembly for melting a 3D printing filament, comprising: a heat conduction member 1. The heat conduction member 1 has a heat conduction function, and at least one flow channel 11 configured to guide a filament to flow is formed inside the heat conduction member 1. After the heat conduction member 1 is heated, it can transfer heat to the filament and play a role in preheating the filament. An accommodating groove 14 is further formed in the heat conduction member 1, the accommodating groove 14 is in communication with the flow channel 11 and forms a first heating flow channel 210, the accommodating groove 14 is configured to accommodate the insertion member 2, and the insertion member 2 is connected to the heat conduction member 1. At least part of the insertion member 2 and a peripheral wall of the accommodating groove 14 form a first gap 3. When the filament flows from the flow channel 11 into the first gap 3, the heat conduction member 1 and the insertion member 2 can press and heat the filament. Meanwhile, the filament flows along a circumferential direction of the insertion member 2, thereby increasing the flow time and the flow area of the filament. After the filament is pressed, the melting rate of the filament can be improved.

The first gap 3 is enclosed by the inner wall of the heat conduction member 1 and the outer wall of the insertion member 2, so the first wall surface 21211 is the inner wall of the heat conduction member 1, and the second wall surface 21212 is the outer wall of the insertion member 2.

Optionally, the insertion member 2 can itself be a heat generating body and can generate heat, that is, the insertion member 2 can be a heating rod or the like. Of course, the insertion member 2 itself may also not be a heat generating body but can conduct heat, that is, heat is transferred through a heating sheet attached to the outside of the heat conduction member 1. When the insertion member 2 itself does not have a heat generating function, the insertion member 2 can be a metal member such as copper or aluminum alloy.

Optionally, the heat conduction member 1 can be a metal member such as copper or aluminum alloy. The heat of the heat conduction member 1 can be from the insertion member 2 or the heating can be achieved by a heating sheet attached to the outer surface of the heat conduction member 1.

Optionally, the heat conduction member 1 and the insertion member 2 can be connected by means of threaded connection or interference fit. The accommodating groove 14 can be a columnar structure or other prismatic columnar structures. If a columnar structure is adopted, the insertion section 21 of the heat conduction member 1 is also correspondingly set to be a columnar structure, and the heat conduction member 1 and the insertion member 2 can be connected by threaded connection. If a prismatic columnar structure is adopted, the insertion section 21 of the heat conduction member 1 is also correspondingly set to be prismatic columnar, and the heat conduction member 1 and the insertion member 2 can be connected by interference fit. Of course, the heat conduction member 1 and the insertion member 2 can also be connected by riveting or welding.

Optionally, the size of the insertion section 21 is slightly smaller than the size of the accommodating groove 14, so that a first gap 3 is formed between the insertion section 21 and the peripheral wall of the accommodating groove 14.

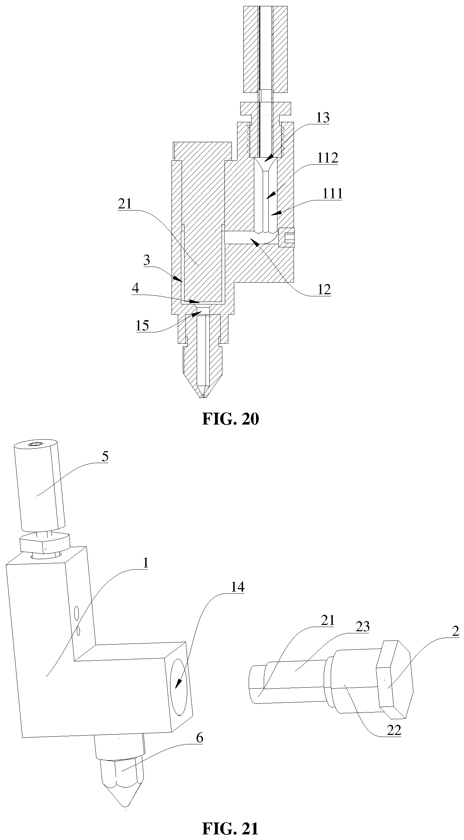

Optionally, the first gap 3 can form a cylindrical surface structure or a planar structure, wherein at least part of the insertion member 2 and the peripheral wall of the accommodating groove 14 are provided with the first gap 3. The insertion section 21 may be such that a first gap 3 is formed between its entire circumference and the receiving groove 14 or a local portion of the insertion section 21 in the circumferential direction and the accommodating groove 14 form the first gap 3. As shown in FIG. 21 to FIG. 24, the outer surface of the insertion section 21 is provided with a projection 23. When the insertion section 21 is inserted into the accommodating groove 14, the local portion of the insertion section 21 and the peripheral wall of the accommodating groove 14 form the first gap 3, which can also enable the first gap 3 to press the filament. The filament flows along the circumferential direction of the insertion member 2, thereby increasing the flow time and the flow area of the filament. After the filament is pressed, the melting rate of the filament can be improved.

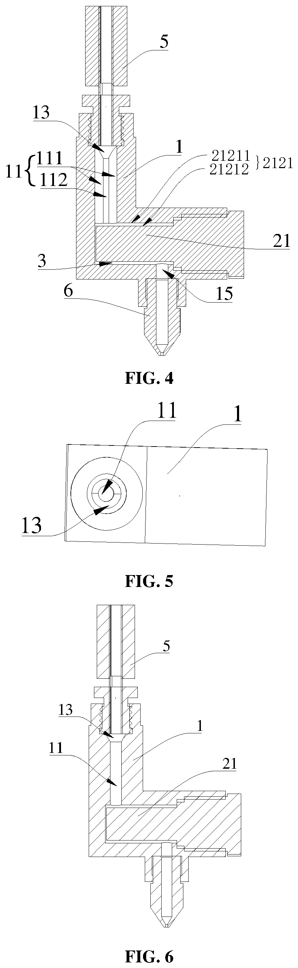

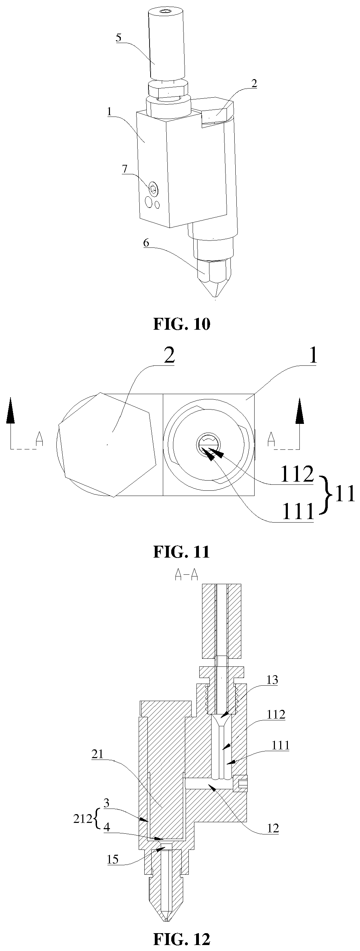

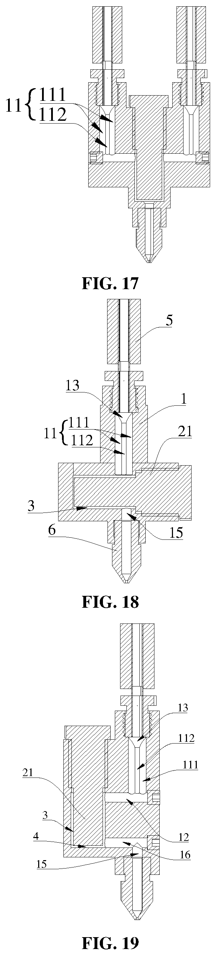

As shown in FIG. 4 and FIG. 12, as an embodiment, the heat conduction member 1 is further provided with an outlet 15 configured to guide the pressed filament to flow out. The accommodating groove 14 is respectively communicated with the outlet 15 and the flow channel 11. The axis of the outlet 15 and the axis of the flow channel 11 are disposed in a mutually offset manner, thereby extending the flow distance of the filament in the first gap 3 along the circumferential direction of the insertion section 21, so that the filament is heated more sufficiently and the melting rate of the filament is improved; or as shown in FIG. 18 and FIG. 19, the axis of the outlet 15 and the axis of the flow channel 11 are disposed coaxially, thereby enabling the melting assembly to reduce the occupied volume in the horizontal direction.

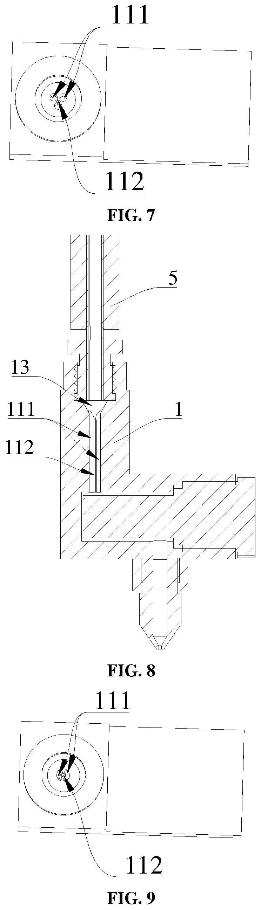

In a solution in which the axis of the accommodating groove 14 and the axis of the flow channel 11 are disposed perpendicular to each other, as shown in FIG. 1 to FIG. 4, as an optional embodiment, the axis of the outlet 15 and the axis of the flow channel 11 are disposed in a mutually offset manner, and the distance between the axis of the outlet 15 and the axis of the flow channel 11 can be adjusted according to actual requirements, thereby being able to extend the distance and duration for which the filament is pressed in the first gap 3, so that the filament is melted more sufficiently and the melting rate of the filament is improved. In a solution in which the axis of the accommodating groove 14 and the axis of the flow channel 11 are disposed in parallel to each other, as shown in FIG. 9 to FIG. 12, as an optional embodiment, the axis of the outlet 15 and the axis of the flow channel 11 are disposed in a mutually offset manner, and the axis of the outlet 15 is disposed coaxially with the accommodating groove 14, thereby enabling the filament to flow out directly through the outlet 15 after being pressed in the first gap 3, shortening the flow distance of the filament after being pressed.

Optionally, the flow channel 11 is located at a side of the heat conduction member 1, and the position of the outlet 15 can be moved to a lower end of the flow channel 11 to achieve a coaxial arrangement of the axis of the outlet 15 and the axis of the flow channel 11. Of course, as shown in FIG. 18, the outlet 15 is located at a middle position of the heat conduction member 1, and the position of the flow channel 11 can also be moved to an upper end of the outlet 15 to similarly achieve a coaxial arrangement of the axis of the outlet 15 and the axis of the flow channel 11.

As an embodiment, the axis of the accommodating groove 14 and the axis of the flow channel 11 are disposed at an angle, so that the insertion member 2 can be inserted into the heat conduction member 1 from different directions and form the first gap 3 with the peripheral wall of the accommodating groove 14, improving the applicability of the melting assembly and meeting the usage requirements of the melting assembly.

Optionally, the angle between the axis of the accommodating groove 14 and the axis of the flow channel 11 can be any angle between 0 and 90 degrees. For example, as shown in FIG. 1 to FIG. 4, the axis of the accommodating groove 14 and the axis of the flow channel 11 are disposed perpendicular to each other, that is, the angle between the axis of the accommodating groove 14 and the axis of the flow channel 11 is 90 degrees. Alternatively, as shown in FIG. 10 to FIG. 13, the axis of the accommodating groove 14 and the axis of the flow channel 11 are disposed in parallel to each other, that is, the angle between the axis of the accommodating groove 14 and the axis of the flow channel 11 is 0 degrees. Of course, the angle between the axis of the accommodating groove 14 and the axis of the flow channel 11 can also be 30 degrees, 45 degrees, or 60 degrees.

As shown in FIG. 1 to FIG. 4, optionally, the axis of the accommodating groove 14 and the axis of the flow channel 11 are disposed perpendicular to each other, thereby shortening the distance between the accommodating groove 14 and the flow channel 11, so that after the filament flows out from the flow channel 11 in the vertical direction, it does not need to pass through other bent flow channels and can directly enter the first gap 3 to be pressed.

As shown in FIG. 10 to FIG. 12, optionally, the axis of the accommodating groove 14 and the axis of the flow channel 11 are disposed in parallel to each other, that is, the insertion member 2 can be inserted into the accommodating groove 14 in the vertical direction, thereby shortening the space occupied by the melting assembly in the horizontal direction.

As shown in FIG. 4, FIG. 12, FIG. 22 and FIG. 24, as an embodiment, the insertion member 2 comprises an insertion section 21, the insertion section 21 is configured to be inserted into the accommodating groove 14, and at least part of the insertion section 21 and the peripheral wall of the accommodating groove 14 form the first gap 3, that is, the insertion section 21 may be such that a first gap 3 is formed between its entire circumference and the receiving groove 14 or a local portion of the insertion section 21 in the circumferential direction and the accommodating groove 14 form the first gap 3.

As shown in FIG. 4, the inner wall and the inner bottom wall of the accommodating groove 14 of the heat conduction member 1 are the first wall surface 21211, and the outer wall and the bottom wall of the insertion section 21 of the insertion member 2 are the second wall surface 21212. The insertion section 21 of the insertion member 2 is inserted into the accommodating groove 14 of the heat conduction member 1, so that the first wall surface 21211 and the second wall surface 21212 form the first gap 3 and/or the second gap 4.

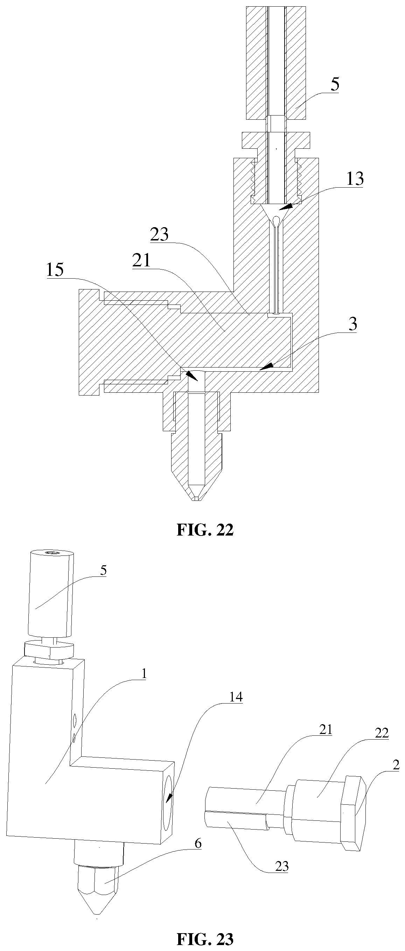

As shown in FIG. 21 and FIG. 22, optionally, the insertion member 2 comprises a projection 23 disposed on the outer surface of the insertion section 21. The projection 23 can be located on the outer surface of an upper half section of the insertion section 21 and is connected to the fixing portion 22, so that a circumferential portion of the insertion section 21 near an end portion can form the first gap 3 with the accommodating groove 14. As shown in FIG. 23 and FIG. 24, the projection 23 can also be located on the outer surface of a lower half section of the insertion section 21 and is spaced apart from the fixing portion 22, so that the outer surface of the upper half section of the insertion section 21 and the accommodating groove 14 form the first gap 3, and the filament can pass through the first gap 3 and through a spacing distance between the projection 23 and the fixing portion 22 and flow out from the outlet 15.

As shown in FIG. 6, as an embodiment, the insertion section 21 abuts against one end of the accommodating groove 14, that is, abuts against the bottom wall of the accommodating groove 14, so that the filament can flow along the circumferential direction of the insertion section 21 to be pressed and flow out from the outlet 15. Of course, the insertion section 21 can also be spaced apart from the bottom wall of the accommodating groove 14, so that the filament can flow into the spacing to be pressed and then flow out through being pressed by the first gap 3, improving the melting rate of the filament.

Optionally, the spacing between the insertion section 21 and one end of the accommodating groove 14, that is, the bottom wall, can be a gap, or the insertion section 21 and the bottom wall of the accommodating groove 14 can have a certain distance therebetween.

Optionally, the spacing between the insertion section 21 and one end of the accommodating groove 14 (the bottom wall) can be adjusted according to actual conditions. For example, in a solution in which the axis of the accommodating groove 14 and the axis of the flow channel 11 are disposed perpendicular to each other, the insertion section 21 can be made shorter, that is, the end portion of the insertion section 21 does not exceed the position of the flow channel 11. Alternatively, the insertion section 21 can exceed the flow channel 11 and be spaced apart from the bottom wall of the accommodating groove 14 by a gap. This gap can be consistent in width with the first gap 3 to maintain the stability of the filament flow. Of course, this gap can also be larger or smaller than the first gap 3.

In a solution in which the axis of the accommodating groove 14 and the axis of the flow channel 11 are disposed in parallel to each other, the insertion section 21 and one end of the accommodating groove 14, that is, the bottom wall, can also abut against each other. In this case, a second connecting flow channel 16 can be additionally formed in the heat conduction member 1. The second connecting flow channel 16 is respectively communicated with the first gap 3 and the outlet 15, which is equivalent to the filament flowing out to the position of the outlet 15 through the second connecting flow channel 16 formed in the peripheral wall of the accommodating groove 14 after being pressed in the first gap 3. Of course, as shown in FIG. 12, the insertion section 21 can also be spaced apart from the bottom wall of the accommodating groove 14 to form a second gap 4, and the outlet 15 is communicated with the second gap 4, so that after the filament is pressed in the first gap 3, it can enter the second gap 4 to be continuously pressed, and at the same time the filament can smoothly flow out from the outlet 15. Of course, the second gap 4 can be wider, so that a certain distance exists between the insertion section 21 and the bottom wall of the accommodating groove 14.

Optionally, in a solution in which the axis of the accommodating groove 14 and the axis of the flow channel 11 are disposed in parallel to each other, the first gap 3 and the second gap 4 can be set to have the same width, or the width of the first gap 3 is slightly larger than that of the second gap 4, or slightly smaller than that of the second gap 4.

Optionally, the insertion member 2 further comprises a fixing portion 22, the fixing portion 22 is fixedly connected to the insertion section 21, and the fixing portion 22 is configured to be connected to the heat conduction member 1.

As shown in FIG. 12, FIG. 13 and FIG. 15, as an embodiment, in a solution in which the axis of the accommodating groove 14 and the axis of the flow channel 11 are disposed in parallel to each other, the heat conduction member 1 is further provided with a first connecting flow channel 12 configured to communicate the flow channel 11 with the first gap 3. One end of the first connecting flow channel 12 is further provided with a plugging member 7. Since the axis of the accommodating groove 14 and the axis of the flow channel 11 are disposed in parallel to each other, after the filament flows out from the flow channel 11, it cannot directly flow into the first gap 3. By providing the first connecting flow channel 12, when the filament flows out from the flow channel 11, it can enter the first gap 3 through the first connecting flow channel 12, and the first connecting flow channel 12 serves a guiding function.

Optionally, the first connecting flow channel 12 penetrates from the outside of the heat conduction member 1, which is convenient for processing. Of course, the first connecting flow channel 12 can enter from any direction of the heat conduction member 1. In order to prevent the filament from flowing out from the first connecting flow channel 12, an end portion of the first connecting flow channel 12 is provided with a plugging member 7 configured to prevent the filament from flowing out.

As shown in FIG. 20, optionally, the first connecting flow channel 12 can be configured as an arc-shaped structure, thereby reducing the flow resistance of the filament at a connection position between the first connecting flow channel 12 and the flow channel 11, facilitating smooth flow of the filament. A metal member being of an arc shape can be filled in the first connecting flow channel 12 to enable the first connecting flow channel 12 to form an arc-shaped structure.

As shown in FIG. 3, FIG. 4, FIG. 7 to FIG. 9, and FIG. 11 to FIG. 15, as an embodiment, the flow channel 11 comprises at least two first sub-flow channels 111 and one second sub-flow channel 112, the plurality of first sub-flow channels 111 are disposed along the circumferential direction of the second sub-flow channel 112, and the cross-sectional area of the second sub-flow channel 112 is smaller than the cross-sectional area of the first sub-flow channel 111, thereby serving to strip the outer surface of the filament, so that the outer surface of the filament flows into the first sub-flow channel 111, while the radial size of the inner core of the filament is relatively small, and therefore the inner core flows into the second sub-flow channel 112 for separate heating by the heat conduction member 1, reducing the influence of the material on the outer surface of the filament on the heating of the inner core, improving the heating effect of the heat conduction member 1 on the filament, improving the heating efficiency of the filament, and further improving the overall melting speed of the filament.

Optionally, the cross-sectional area of the first sub-flow channel 111 can be 2 times the cross-sectional area of the second sub-flow channel 112. Of course, it can also be other multiples, such as three times, four times, or five times. It can be understood that when the preheated filament passes through the second sub-flow channel 112 and the first sub-flow channel 111, the second sub-flow channel 112 cooperates with the first sub-flow channel 111 to strip the peripheral softened portion of the filament, so that the peripheral softened portion of the filament enters the first sub-flow channel 111, and the axial core portion of the filament enters the second sub-flow channel 112 for heating. This arrangement enables the second sub-flow channel 112 to heat the inner core of the filament, improving heating efficiency.

Optionally, the first sub-flow channel 111 and the second sub-flow channel 112 constitute a melting flow channel 11. The cross section of the second sub-flow channel 112 is set to be smaller than the cross section of the adjacent first sub-flow channel 111, so that the center of the melting flow channel 11 becomes thinner. In this way, the melting flow channel 11 can play a role in preheating the filament. After being preheated, the outer surface of the filament will be squeezed into the first sub-flow channel 111, and the inner core of the filament will be squeezed into the second sub-flow channel 112. The protrusion 220 of the heat conduction member 1 heats the inner core separately, reducing the influence of the material on the outer surface of the filament on the heating of the inner core, improving the heating effect of the heat conduction member 1 on the filament, improving the heating efficiency of the filament, and further improving the overall melting speed of the filament.

Optionally, the flow channel 11 and the heatbreak 5 constitute a preheating section, which can facilitate the deformation of the filament, and then through the pressing of the first gap 3, the melting rate of the filament can be improved.

Optionally, the flow channel 11 can also be a circular hole straight flow channel in which the first sub-flow channel 111 or the second sub-flow channel 112 is not formed.

As shown in FIG. 3 and FIG. 4, FIG. 7 and FIG. 8, FIG. 11 and FIG. 12, and FIG. 14 and FIG. 15, as an embodiment, the first sub-flow channel 111 is communicated with the second sub-flow channel 112, reducing the blocking of the filament by an isolation region between the first sub-flow channel 111 and the second sub-flow channel 112, improving the smoothness of the flow of the filament, and at the same time enabling the outer surface of the preheated filament to directly enter the first sub-flow channel 111, and the inner core of the filament receiving less heat to enter the second sub-flow channel 112 for direct heating, thereby improving heating efficiency.

Optionally, axes of at least one first sub-flow channel 111 and the second sub-flow channel 112 are disposed coaxially with an extension line of the heat conduction member 1 in the same radial direction.

As shown in FIG. 3 and FIG. 4, and FIG. 11 and FIG. 12, optionally, the quantity of the first sub-flow channels 111 is set to two, three, four, or the like. Through the above design, the flow rate and the flow smoothness of the filament can be increased. The two first sub-flow channels 111 can heat the outer surface of the filament, and the inner core receiving less heat can enter the second sub-flow channel 112 for direct heating, further improving the heating efficiency.

As shown in FIG. 7 and FIG. 8, and FIG. 14 and FIG. 15, optionally, the quantity of the first sub-flow channels 111 is set to three. The three first sub-flow channels 111 are all communicated with the second sub-flow channel 112, thereby increasing the flowability of the filament, so that more of the preheated outer surface of the filament flows into the first sub-flow channel 111, increasing the contact area between the filament and the first sub-flow channel 111 and increasing heating efficiency.

Optionally, the three first sub-flow channels 111 are uniformly arranged along the circumferential direction of the second sub-flow channel 112, thereby improving the uniformity of the filament flowing into the first sub-flow channels 111 and increasing the flow rate of the filament entering the first sub-flow channels 111, further improving the heating efficiency of the filament.

As shown in FIG. 9, as an alternative embodiment, the first sub-flow channel 111 and the second sub-flow channel 112 are disposed in an alternating manner. The cross section of the second sub-flow channel 112 is smaller than that of the first sub-flow channel 111, thereby similarly being able to strip the inner core of the filament. The second sub-flow channel 112 separately heats the inner core, and the first sub-flow channel 111 heats the outer surface of the filament, thereby improving the heating efficiency of the filament.

As shown in FIG. 9, the cross section of the first sub-flow channel 111 is a closed shape surrounded by a plurality of arc-shaped sides, thereby increasing the contact area between the heat conduction member 1 and the filament and improving heating efficiency. The second sub-flow channel 112 can be circular or square. As an optional mode, the second sub-flow channel 112 is circular.

As shown in FIG. 3, FIG. 4, FIG. 7 to FIG. 9, and FIG. 11 to FIG. 15, as an embodiment, a transition flow channel 13 is formed inside the heat conduction member 1. The transition flow channel 13 is communicated with the flow channel 11. An end of the transition flow channel 13 far from the flow channel 11 is configured as a first end, and an end connected to the flow channel 11 is configured as a second end. The cross-sectional area of the transition flow channel 13 gradually decreases from the first end toward the second end, so that the transition flow channel 13 constitutes a gradually narrowing section. By providing the transition flow channel 13, the transition flow channel 13 serves a transition function for the flow of the filament, which can reduce the flow resistance of the filament flowing down from the heatbreak 5, because the filament flowing down from the heatbreak 5 has been preheated through the heatbreak 5 on the outside, while the inner core is relatively hard. Therefore, by providing the transition flow channel 13, the resistance of the hard core flowing into the second sub-flow channel 112 is reduced, a buffering effect is provided for the flow of the filament, the filament is facilitated to flow into the flow channel 11, and the melting efficiency of the filament is improved.

Optionally, the transition flow channel 13 can be made into a conical shape or a chamfer.

As an alternative embodiment, a transition flow channel 13 is formed inside the heat conduction member 1. The transition flow channel 13 is communicated with the flow channel 11. The transition flow channel 13 comprises a plurality of transition sub-flow channels connected in communication with each other (not shown in figures). The cross-sectional area of a transition sub-flow channel at an end of the transition flow channel 13 far from the flow channel 11 is larger than the cross-sectional area of a transition sub-flow channel at an end connected to the flow channel 11, so that the transition flow channel 13 forms a multi-stage stepped transition sub-flow channel, which serves a transition function for the flow of the filament and can reduce the flow resistance of the filament flowing down from the heatbreak 5.

Optionally, the transition sub-flow channels can be provided in two or three segments, or more segments.

As an alternative embodiment, a straight hole flow channel having a diameter larger than that of the second sub-flow channel 112 is formed inside the heat conduction member 1, and the straight hole flow channel is communicated with the flow channel 11.

Of course, in some cases, the transition flow channel 13 may also not be provided inside the heat conduction member 1, that is, the flow channel 11 is directly communicated with a pipeline inside the heatbreak 5.

As an embodiment, the melting assembly further comprises a heating sheet, and the heating sheet is attached to the outer surface of the heat conduction member 1. By attaching the heating sheet to the outside of the heat conduction member 1, separate temperature control can be achieved for the filament in the flow channel 11 and in the first gap 3. At the same time, compared with the heat conduction member 1 transferring heat through the insertion member 2, attaching the heating sheet to the outer surface of the heat conduction member 1 can also improve heating efficiency, further improving the flowability of the filament.

Optionally, the heating sheet can be a ceramic heating sheet.

As shown in FIG. 1 and FIG. 10, as an embodiment, the melting assembly further comprises a nozzle 6, and the nozzle 6 is mounted at the position of the outlet 15. By providing the nozzle 6, the pressed filament can be guided to flow out, meeting the flow requirements of the filament.

Optionally, the nozzle 6 can be made of copper, aluminum, or other metals having good heat conduction effects.

As shown in FIG. 1 and FIG. 10, as an embodiment, the melting assembly further comprises a heatbreak 5, the heatbreak 5 is connected to the heat conduction member 1, and a flow channel 11 inside the heatbreak 5 is communicated with the transition flow channel 13, so that the filament can flow into the flow channel 11 through the heatbreak 5, improving the smoothness of the filament.

Optionally, the cross-sectional areas of the first sub-flow channel 111 and the second sub-flow channel 112 are 4% to 64% of the cross-sectional area of the heatbreak 5, so that when the filament flows to the second sub-flow channel 112, since the cross section of the second sub-flow channel 112 is smaller than the cross section of the heatbreak 5, the filament can be stripped. At the same time, the cross-sectional areas of the first sub-flow channel 111 and the second sub-flow channel 112 can be adjusted according to actual needs, improving operation convenience.

Optionally, the heatbreak 5 and the heat conduction member 1 can be connected by threaded connection, welding, or the like.

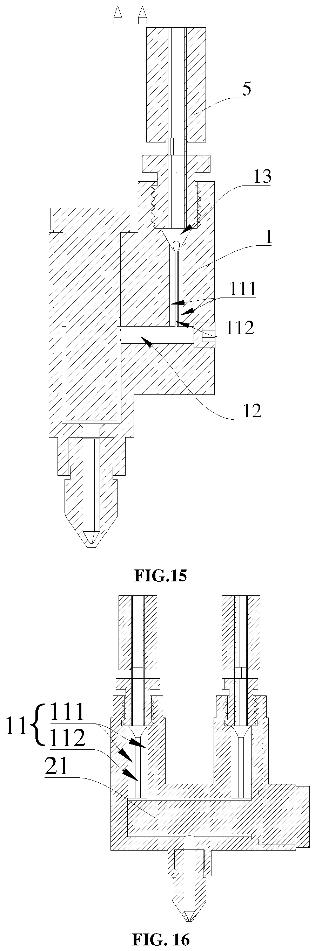

As shown in FIG. 16 and FIG. 17, as an embodiment, a plurality of flow channels 11 are provided, thereby being able to meet simultaneous melting of multiple filaments, and further, different colored filaments can be melted in the heat conduction member 1, improving the adaptability of the melting assembly.

In summary, the melting assembly for melting a 3D printing filament provided by the embodiments of the present invention has at least one flow channel 11 configured to guide a filament to flow being disposed inside the heat conduction member 1, and an accommodating groove 14 configured to accommodate the insertion member 2 being further disposed inside the heat conduction member 1. The accommodating groove 14 is communicated with the flow channel 11, and a first gap 3 configured to press the filament is formed between the insertion member 2 and the peripheral wall of the accommodating groove 14. When the insertion member 2 transfers heat to the heat conduction member 1, the heat conduction member 1 and the insertion member 2 can heat the filament in the first gap 3. When the filament enters the first gap 3 from the flow channel 11, the filament is heated along the circumferential direction of the first gap 3, increasing the heating area, and is simultaneously pressed, and the pressed filament can be rapidly melted, thereby improving the melting rate of the filament by the melting assembly and meeting the demand for rapid printing.

The embodiments of the present invention further provide another more specific heating structure and melting assembly for melting a 3D printing filament. As another embodiment, the melting assembly comprises the heating structure, and the body 200 of the heating structure comprises the heat conduction member 1, but does not comprise the insertion member 2. The gap 212 is only formed by the inner wall of the body 200.

As shown in FIG. 25 to FIG. 31, the embodiments of the present invention introduce a melting assembly for melting a 3D printing filament. The melting assembly comprises a heat conduction member 1, the heat conduction member 1 is provided with a through-type heating flow channel 210 configured to convey a filament, the heating flow channel 210 has a flow channel 11 and a gap 212, and the flow channel 11 and the gap 212 are sequentially communicated in the conveying direction. The gap 212 has a pair of wall surfaces 2121 disposed opposite to each other, a distance between the pair of wall surfaces 2121 is smaller than the diameter of the filament, and a cross-sectional area of the gap 212 is larger than the cross-sectional area of the filament.

In these embodiments, the heating flow channel 210 penetrates through the heat conduction member 1 and respectively forms a feed inlet and a discharge outlet at two opposite ends of the heat conduction member 1. The feed inlet is communicated with the heatbreak 5, and the discharge outlet is communicated with the nozzle 6. That is, the filament sequentially passes through the heatbreak 5, the feed inlet, the heating flow channel 210, the discharge outlet, and the nozzle 6, and in this process, the filament is gradually heated and melted.

The heating flow channel 210 has a conveying direction, and the heating flow channel 210 can be divided into the flow channel 11 and the gap 212 according to the flow direction of the filament. The flow channel 11 is located at a front end of the heating flow channel 210 and is configured to preliminarily heat the filament and soften an outer layer of the filament. A cross-sectional area of an end of the flow channel 11 near the feed inlet is relatively large to ensure that the filament can pass through smoothly. The gap 212 is located downstream of the flow channel 11 and is configured to rapidly melt the filament.

Furthermore, the distance between the pair of wall surfaces 2121 is set to be smaller than the diameter of the filament, and the pair of wall surfaces 2121 are disposed opposite to each other. The distance between the pair of wall surfaces 2121 in their opposing direction is smaller than the diameter of the filament, and the cross-sectional area of the gap 212 is larger than the cross-sectional area of the filament, which means that in the flow process of the filament in the gap 212, the filament can be pressed and dispersed by the wall surfaces 2121, and the contact area between the filament and the inner wall of the gap 212 is increased, which is conducive to improving heat transfer, thereby accelerating the melting speed of the filament.

In the present embodiment, a through-type heating flow channel 210 configured to convey a filament is formed inside the heat conduction member 1, the heating flow channel 210 has a flow channel 11 and a gap 212, and the flow channel 11 and the gap 212 are sequentially communicated in the conveying direction.

The heating flow channel 210 has a conveying direction, and the heating flow channel 210 can be divided into the flow channel 11 and the gap 212 according to the flow direction of the filament.

In the present embodiment, the flow channel 11 is located at a front end of the heating flow channel 210 and is configured to preliminarily heat the filament and soften an outer layer of the filament. A cross-sectional area of an end of the flow channel 11 near the feed inlet is relatively large to ensure that the filament can pass through smoothly. The gap 212 is located downstream of the flow channel 11 and is configured to rapidly melt the filament.

In the present embodiment, the gap 212 has a pair of wall surfaces 2121 disposed opposite to each other. The pair of wall surfaces 2121 comprises a first wall surface 21211 and a second wall surface 21212, the first wall surface 21211 is an upper inner wall of the body 200, and the second wall surface 21212 is a lower inner wall of the body 200. The distance between the first wall surface 21211 and the second wall surface 21212 is smaller than the diameter of the filament, and the cross-sectional area of the gap 212 is larger than the cross-sectional area of the filament.

It can be understood that the distance between the first wall surface 21211 and the second wall surface 21212 is set to be smaller than the diameter of the filament, and the first wall surface 21211 and the second wall surface 21212 are disposed opposite to each other. The distance between the first wall surface 21211 and the second wall surface 21212 in the opposing direction thereof is smaller than the diameter of the filament, and the cross-sectional area of the gap 212 is larger than the cross-sectional area of the filament, which means that in the flow process of the filament in the gap 212, the filament can be pressed and dispersed by the first wall surface 21211 and the second wall surface 21212, and the contact area between the filament and the wall surfaces 2121 of the gap 212 is increased, which is conducive to improving heat transfer, thereby accelerating the melting speed of the filament.

In some optional embodiments, the wall surfaces 2121 are configured as planar structures, and accordingly the gap 212 is formed as a planar structure. Of course, in other embodiments, the wall surfaces 2121 can also be configured as arc-shaped surfaces, wave-shaped surfaces, and the like, and accordingly the gap 212 is formed as an arc-shaped surface structure, a wave-shaped surface structure, or the like.

In some optional embodiments, the shape of the planar structure at least comprises circular, arc-shaped, rectangular, elliptical, and rounded rhombic shapes, or the like.

It can be understood that the larger the exposed area of the filament, the more conducive it is to improving heat transfer efficiency. Moreover, by pressing and dispersing the filament through the gap 212, heat is facilitated to be rapidly conducted to the core of the filament, improving melting efficiency. In simple terms, a flat and elongated structure is formed between the wall surfaces, thereby enabling the filament to be flattened into a sheet shape after entering the gap 212. Obviously, the filament can be effectively dispersed, which is conducive to heating the core of the filament and can increase the heat conduction area of the filament, improving melting efficiency.

In some optional embodiments, the gap 212 is in a flat shape and forms a rectangular channel.

In some optional embodiments, in a direction perpendicular to the wall surfaces 2121, the gap 212 is in an elliptical shape, a rhombic shape, a polygonal shape, or the like.

In some optional embodiments, in the conveying direction, the length of the gap 212 in a direction perpendicular to the conveying direction changes from small to large and then from large to small. In other words, middle sections of the two wall surfaces 2121 are bent outward. This arrangement can reduce flow dead corners of the filament.

Exemplarily, some optional embodiments provide a melting assembly. The heating flow channel 210 is divided into a flow channel 11 and a gap 212, and the heat conduction member 1 is made of copper or other materials having a high heat conduction coefficient. The heating flow channel 210 penetrates through the heat conduction member 1, and the filament enters from one end and flows out from the other end. The length of the flow channel 11 is L₁, and the diameter thereof is D₁. The cross-sectional area of the flow channel 11 is A₁ = π(D₁/2)². The flow channel 11 is mainly configured to preliminarily heat the filament to ensure that the filament can be softened and smoothly enter the gap 212. The cross section of the gap 212 is in a rectangular shape, the length of the gap 212 is L₂, and the width thereof is L₃. The cross-sectional area of the gap 212 is A₂ = L₂ × L₃. The wall surfaces 2121 are sequentially arranged in the width direction, so L₃ is smaller than D₁, L₂ is larger than D₁, and A₂ is larger than A₁.

It can be understood that the design of the gap 212 enables the filament to be compressed in the gap 212, thereby increasing the contact area between the filament and the heat conduction member 1, improving heat transfer efficiency, and accelerating the melting of the filament.

Therefore, through the above structural improvement design of the melting assembly, the filament is subjected to greater pressure in the gap 212, so that the filament is compressed into a thinner shape. The cross-sectional area of the gap 212 is larger than the cross-sectional area of the filament, which increases the contact area between the filament and the heat conduction member 1. Moreover, the heat conduction effect on the core of the filament can be improved, which is conducive to improving heat transfer efficiency, thereby accelerating the overall melting speed of the filament. This design is particularly suitable for application scenarios requiring high-speed printing and can significantly improve printing speed and efficiency.

As shown in FIG. 27, in the present embodiment, at least one end of the gap 212 is provided with a guide hole channel, and the guide hole channel is configured to guide the filament through the heating flow channel 210. Optionally, a guide hole channel is disposed at an upstream side of the gap 212. Alternatively, a guide hole channel is disposed at a downstream side of the gap 212. Alternatively, guide hole channels are disposed at both the upstream side and the downstream side of the gap 212. Obviously, the purpose of providing the guide hole channel is to serve a flow guiding function.

As shown in FIG. 27, in some optional embodiments, as described below, the guide hole channel at an end of the gap 212 near the flow channel 11 is a second flow guide portion 214, which is equivalent to the second flow guide portion 214 being disposed at an end of the flow channel 11 near the gap 212, and the second flow guide portion 214 is configured to guide the filament in the flow channel 11 into the gap 212.

In these embodiments, the second flow guide portion 214 is for guiding the filament to smoothly flow from the flow channel 11 into the gap 212. That is, by optimizing the flow path of the filament, the resistance when the filament enters the gap 212 can be reduced, and the flowability of the filament can be improved. Moreover, by ensuring that the filament can smoothly transition to the gap 212, the melting process of the filament can be accelerated.

Optionally, the shape of the second flow guide portion 214 can be designed according to specific application requirements. Common shapes include conical, frustoconical, sloped, or tapered shapes.

It can be understood that, in the design of the melting assembly, the second flow guide portion 214 is disposed at an end of the flow channel 11 near the gap 212. The diameter of the flow channel 11 is slightly larger than the diameter of the filament to ensure that the filament can pass through smoothly. The flow channel 11 is configured to preliminarily preheat the filament to soften it. The spacing of the gap 212 is smaller than the diameter of the filament to ensure that the filament is compressed when passing through the gap 212, and the gap 212 is conducive to accelerating the melting process of the filament. The length of the second flow guide portion 214 can be determined according to the diameter of the filament and the difference between the flow channel 11 and the spacing of the gap 212.

Obviously, before entering the gap 212, the filament first passes through the second flow guide portion 214, which helps to ensure that the filament can smoothly transition to the gap 212. The shape and position of the second flow guide portion 214 can further optimize the flow path of the filament, reduce the resistance when the filament enters the gap 212, and thereby improve the melting speed of the filament.

As shown in FIG. 27, in some optional embodiments, as described below, the guide hole channel at an end of the gap 212 facing away from the flow channel 11 is a first flow guide portion 213, which is equivalent to the first flow guide portion 213 being disposed at an end of the gap 212 near the nozzle 6, and the first flow guide portion 213 is configured to guide the filament in the gap 212 into the nozzle 6.

In these embodiments, the first flow guide portion 213 is disposed at an end of the gap 212 near the nozzle 6. This design aims to better guide the filament to smoothly enter the nozzle 6 from the gap 212 to ensure that the filament can be uniformly distributed in the nozzle 6 and extruded. That is, by optimizing the flow path of the filament, the resistance when the filament enters the nozzle 6 can be reduced, the flowability of the filament can be improved, ensuring that the filament can smoothly transition to the nozzle 6, and the consistency of the filament during extrusion can be improved.

Exemplarily, the shape of the first flow guide portion 213 can be designed according to specific application requirements. Common shapes include conical, frustoconical, sloped, or tapered shapes.

It can be understood that, through the above design, before entering the nozzle 6, the filament first passes through the first flow guide portion 213, which helps to ensure that the filament can smoothly transition to the nozzle 6. The shape and position of the first flow guide portion 213 can further optimize the flow path of the filament, reduce the resistance when the filament enters the nozzle 6, and thereby improve the extrusion effect of the filament.

As shown in FIG. 27, in some optional embodiments, as described below, the second flow guide portion 214 is disposed at an end of the flow channel 11 near the gap 212, and the second flow guide portion 214 is configured to guide the filament in the flow channel 11 into the gap 212. The first flow guide portion 213 is disposed at an end of the gap 212 near the nozzle 6, and the first flow guide portion 213 is configured to guide the filament in the gap 212 into the nozzle 6.

In these embodiments, both the second flow guide portion 214 and the first flow guide portion 213 are simultaneously provided, so as to simultaneously have the above technical effects of the second flow guide portion 214 and the first flow guide portion 213. Obviously, on the basis of simultaneously providing the second flow guide portion 214 and the first flow guide portion 213, the flow resistance of the filament can be further reduced.

As shown in FIG. 26 and FIG. 27, in some embodiments, the wall surfaces 2121 and the extending direction of the flow channel 11 are disposed in an intersecting manner. Accordingly, the gap 212 formed by the two wall surfaces 2121 intersects the extending direction of the flow channel 11 and they are disposed at a certain angle.

It can be understood that the wall surfaces 2121 in these embodiments refer to a pair of inner wall surfaces 2121 of the gap 212 configured to press the filament. The pair of wall surfaces 2121 comprises a first wall surface 21211 and a second wall surface 21212, the first wall surface 21211 is an upper inner wall of the body 200, and the second wall surface 21212 is a lower inner wall of the body 200. The distance of the gap 212 formed by this pair of wall surfaces 2121 is smaller than the diameter of the filament, so that mechanical pressing is applied to the filament when it passes through. Moreover, the design of the wall surfaces 2121 is conducive to increasing the contact area between the filament and the heat conduction member 1, thereby accelerating the melting process of the filament.

The extending direction of the wall surfaces 2121 intersects the extending direction of the flow channel 11, and this layout can optimize the transition of the filament from the flow channel 11 to the gap 212. By arranging the wall surfaces 2121 and the flow channel 11 in an intersecting manner, the flow path of the filament can be changed when the filament enters the gap 212, thereby facilitating the dispersion of the filament, increasing the contact area between the filament and the heat conduction member 1, and accelerating the melting process of the filament.

Exemplarily, the extending direction of the flow channel 11 can be vertical, and the extending direction of the wall surfaces 2121 can be horizontal. This intersecting arrangement is conducive to changing the flow path of the filament, increasing the contact area between the filament and the heat conduction member 1, thereby improving the melting speed of the filament. At the same time, the overall length dimension of the melting assembly can be reduced.

Of course, in some optional embodiments, the angle between the wall surfaces 2121 and the extending direction of the flow channel 11 can be 10 degrees, 20 degrees, 30 degrees, 40 degrees, 50 degrees, 60 degrees, 70 degrees, 80 degrees, or the like. Accordingly, the angle between the gap 212 and the extending direction of the flow channel 11 is 10 degrees, 20 degrees, 30 degrees, 40 degrees, 50 degrees, 60 degrees, 70 degrees, 80 degrees, or the like.

It is worth mentioning that when the gap 212 formed by the two wall surfaces 2121 intersects the extending direction of the flow channel 11 and they are disposed at a certain angle, a transition design is performed on the gap 212 with the first flow guide portion 213 and the second flow guide portion 214, and the following is a corresponding description for the transition design.

As shown in FIG. 27 and FIG. 28, in some embodiments, the guide hole channel at an end of the gap 212 facing away from the flow channel 11 is the first flow guide portion 213. The first flow guide portion 213 has a first large-diameter end and a first small-diameter end, the first small-diameter end is communicated with the nozzle 6, and the first large-diameter end is communicated with the gap 212.

It can be understood that the first flow guide portion 213 in these embodiments has the first large-diameter end and the first small-diameter end. The first small-diameter end is communicated with the nozzle 6, and the first large-diameter end is communicated with the gap 212. This design is conducive to guiding the filament to smoothly transition from the gap 212 to the nozzle 6. The first small-diameter end is communicated with the nozzle 6, and the inner diameter thereof is designed to match the inner diameter of the nozzle 6 to ensure that the filament can smoothly enter the nozzle 6 from the first flow guide portion 213. By ensuring that the inner diameter of the first small-diameter end matches the inner diameter of the nozzle 6, the resistance when the filament enters the nozzle 6 can be reduced. The first large-diameter end of the first flow guide portion 213 is communicated with the flow channel 11, and the inner diameter of the first large-diameter end can be slightly larger than the diameter of the filament to ensure that the filament can smoothly transition to the first flow guide portion 213.

Obviously, through the above design, before entering the nozzle 6, the filament first passes through the first flow guide portion 213, which helps the filament to smoothly transition to the nozzle 6. The design of the first large-diameter end and the first small-diameter end of the first flow guide portion 213 can further optimize the flow path of the filament, reduce the resistance when the filament enters the nozzle 6, and thereby improve the extrusion effect of the filament.

As shown in FIG. 27 and FIG. 28, in some embodiments, the guide hole channel at an end of the gap 212 near the flow channel 11 is the second flow guide portion 214. The second flow guide portion 214 has a second large-diameter end and a second small-diameter end, the second small-diameter end is communicated with the flow channel 11, the second large-diameter end is communicated with the gap 212, and the inner diameter of the second small-diameter end is not smaller than the inner diameter of the flow channel 11.

It can be understood that the second flow guide portion 214 in these embodiments is conducive to optimizing the transition of the filament from the flow channel 11 to the gap 212, improving the melting speed of the filament. The second flow guide portion 214 has the second large-diameter end and the second small-diameter end, the second small-diameter end is communicated with the flow channel 11, and the second large-diameter end is communicated with the gap 212. The inner diameter of the second small-diameter end is not smaller than the inner diameter of the flow channel 11, which means that the filament can smoothly transition from the flow channel 11 to the second flow guide portion 214, reducing flow resistance. Since the gap 212 causes the filament to be pressed, the inner diameter of the second large-diameter end may be slightly larger than the diameter of the filament to ensure that the filament can smoothly transition to the gap 212.

Obviously, before entering the gap 212, the filament first passes through the second flow guide portion 214, which helps to ensure that the filament can smoothly transition to the gap 212. The design of the second small-diameter end and the second large-diameter end of the second flow guide portion 214 can further optimize the flow path of the filament, reduce the resistance when the filament enters the gap 212, and thereby improve the melting speed of the filament.

As shown in FIG. 27 and FIG. 28, in some embodiments, in a case where the second flow guide portion 214 is disposed at the flow channel 11 and the first flow guide portion 213 is disposed at the gap 212, the second flow guide portion 214 has the second large-diameter end and the second small-diameter end, the second small-diameter end is communicated with the flow channel 11, the second large-diameter end is communicated with the gap 212, and the inner diameter of the second small-diameter end is not smaller than the inner diameter of the flow channel 11. The first flow guide portion 213 has the first large-diameter end and the first small-diameter end, the first small-diameter end is communicated with the nozzle 6, and the first large-diameter end is communicated with the gap 212.

In these embodiments, both the second flow guide portion 214 and the first flow guide portion 213 are simultaneously provided, and the specific structures of the second flow guide portion 214 and the first flow guide portion 213 are respectively disclosed, so as to simultaneously have the above technical effects of the second flow guide portion 214 and the first flow guide portion 213.

As shown in FIG. 29 and FIG. 30, in some embodiments, the wall surfaces 2121 and the extending direction of the flow channel 11 are disposed in a parallel manner. Accordingly, the gap 212 formed by the two wall surfaces 2121 is disposed in parallel with the extending direction of the flow channel 11.

In these embodiments, the wall surfaces 2121 and the extending direction of the flow channel 11 are disposed in a parallel manner to provide another embodiment. The extending direction of the wall surfaces 2121 is disposed in parallel with the extending direction of the flow channel 11, and this layout can optimize the transition of the filament from the flow channel 11 to the gap 212. By arranging the wall surfaces 2121 and the flow channel 11 in a parallel manner, the speed at which the filament enters the gap 212 can be increased, accelerating the melting process of the filament.

Exemplarily, the extending directions of both the flow channel 11 and the gap 212 can be horizontal, and the extending direction of the wall surfaces 2121 is also horizontal and parallel to the flow channel 11.

It is worth mentioning that when the gap 212 formed by the two wall surfaces 2121 is disposed in parallel with the extending direction of the flow channel 11, a transition design is performed on the gap 212 with the first flow guide portion 213 and the second flow guide portion 214, and the following is a corresponding description for the transition design.

As shown in FIG. 29 and FIG. 30, in some embodiments, the guide hole channel at an end of the gap 212 facing away from the flow channel 11 is the first flow guide portion 213. The heating flow channel 210 forms an outlet 15 in the heat conduction member 1, and the outlet 15 is configured to have the nozzle 6 mounted thereat. The first flow guide portion 213 extends along the extending direction of the outlet 15, and the inner diameter of the first flow guide portion 213 is not smaller than the inner diameter of the outlet 15. The inner wall of the first flow guide portion 213 has a first connection port 2131, the first connection port 2131 extends along the extending direction of the first flow guide portion 213, and the first connection port 2131 is communicated with the gap 212.

In these embodiments, the first flow guide portion 213 extends along the extending direction of the outlet 15, which is consistent with the flow direction of the filament. The inner diameter of the first flow guide portion 213 is not smaller than the inner diameter of the nozzle 6, which means that the filament can smoothly transition from the gap 212 to the first flow guide portion 213. By ensuring that the inner diameter of the first flow guide portion 213 is sufficiently large, the resistance when the filament enters the first flow guide portion 213 can be reduced. The first connection port 2131 is disposed on the inner wall of the first flow guide portion 213 and extends along the extending direction of the nozzle 6 mounted at the outlet 15. The first connection port 2131 is communicated with the gap 212, which means that the filament can smoothly transition from the first flow guide portion 213 to the nozzle 6.

It can be understood that, through the above design, before entering the nozzle 6, the filament first passes through the first flow guide portion 213, which helps to ensure that the filament can smoothly transition to the nozzle 6. The design of the inner diameter of the first flow guide portion 213 and the first connection port 2131 can further optimize the flow path of the filament, reduce the resistance when the filament enters the nozzle 6, and thereby improve the extrusion effect of the filament.

In some embodiments, the guide hole channel at an end of the gap 212 near the flow channel 11 is the second flow guide portion 214. The second flow guide portion 214 extends along the extending direction of the flow channel 11, and the inner diameter of the second flow guide portion 214 is not smaller than the inner diameter of the flow channel 11. The inner wall of the second flow guide portion 214 has a second connection port 2141, the second connection port 2141 extends along the extending direction of the flow channel 11, and the second connection port 2141 is communicated with the gap 212.

In these embodiments, the second flow guide portion 214 extends along the extending direction of the flow channel 11, which is consistent with the flow direction of the filament. The inner diameter of the second flow guide portion 214 is not smaller than the inner diameter of the flow channel 11, which means that the filament can smoothly transition from the flow channel 11 to the second flow guide portion 214. By ensuring that the inner diameter of the second flow guide portion 214 is sufficiently large, the resistance when the filament enters the second flow guide portion 214 can be reduced.

The second connection port 2141 is disposed on the inner wall of the second flow guide portion 214 and extends along the extending direction of the flow channel 11. The second connection port 2141 is communicated with the gap 212, which means that the filament can smoothly transition from the second flow guide portion 214 to the gap 212.

Through the above design, before entering the gap 212, the filament first passes through the second flow guide portion 214, which helps to ensure that the filament can smoothly transition to the gap 212. The design of the inner diameter of the second flow guide portion 214 and the second connection port 2141 can further optimize the flow path of the filament, reduce the resistance when the filament enters the gap 212, and thereby improve the melting speed of the filament.

As shown in FIG. 29 and FIG. 30, in some embodiments, the guide hole channel at an end of the gap 212 facing away from the flow channel 11 is the first flow guide portion 213, and the guide hole channel at an end of the gap 212 near the flow channel 11 is the second flow guide portion 214. The second flow guide portion 214 extends along the extending direction of the flow channel 11, and the inner diameter of the second flow guide portion 214 is not smaller than the inner diameter of the flow channel 11. The inner wall of the second flow guide portion 214 has a second connection port 2141, the second connection port 2141 extends along the extending direction of the flow channel 11, and the second connection port 2141 is communicated with the gap 212. The heating flow channel 210 forms an outlet 15 in the heat conduction member 1. The first flow guide portion 213 extends along the extending direction of the outlet 15, and the inner diameter of the first flow guide portion 213 is not smaller than the inner diameter of the outlet 15. The inner wall of the first flow guide portion 213 has a first connection port 2131, the first connection port 2131 extends along the extending direction of the first flow guide portion 213, and the first connection port 2131 is communicated with the flow channel 11.

In these embodiments, the difference from the above embodiments is that the present embodiment simultaneously provides the second flow guide portion 214 and the first flow guide portion 213, and respectively discloses the specific structures of the second flow guide portion 214 and the first flow guide portion 213, so as to simultaneously have the above technical effects.

In some embodiments, in the conveying direction, the flow channel 11 has a guide section and a stripping section connected in sequence, and the stripping section is communicated with the gap 212. The cross-sectional area of the guide section gradually decreases in the conveying direction.

In some optional embodiments, the structure of the guide section is configured to facilitate the flow of the filament, so as to facilitate the filament entering the stripping section. Exemplarily, the guide section is configured as a conical structure, and the stripping section is configured as an equal-diameter structure. Of course, in other embodiments, the guide section can also be configured as a stepped hole structure, which is not specifically limited herein.

As shown in FIG. 30 and FIG. 31, in some embodiments, the inner wall of the flow channel 11 has a plurality of protrusions 220, the plurality of protrusions 220 are spaced apart from each other along the circumferential direction of the heating flow channel 210, and the protrusions 220 extend along the conveying direction. A first sub-flow channel 111 is formed between adjacent protrusions 220, and a second sub-flow channel 112 is formed between end portions of all the protrusions 220 facing away from the inner wall of the flow channel 11.

In some embodiments, in a direction toward the gap 212 of the second sub-flow channel 112, the cross-sectional area of the second sub-flow channel 112 gradually decreases, the minimum cross-sectional area of the second sub-flow channel 112 is smaller than the cross-sectional area of the filament, and the maximum cross-sectional area of the second sub-flow channel 112 is larger than the cross-sectional area of the filament.

It can be understood that, in these embodiments, in the conveying direction, after the filament enters the heating flow channel 210, under the pressing action of the protrusions 220, the softened outer layer of the filament can be rapidly squeezed toward the first sub-flow channels 111 between adjacent protrusions 220 and flows along the conveying direction, and the second sub-flow channel 112 is configured to convey the core of the filament.

Meanwhile, the protrusions 220 gradually penetrate into the filament and approach the core, increasing the heat conduction contact area, and can directly conduct heat to the core of the filament, thereby rapidly heating and melting the interior of the filament. The softened outer layer of the filament is squeezed into the gaps 212 between adjacent protrusions 220 and continues to be heated and melted. Obviously, in the process of the filament passing through the flow channel 11, the softened portion of the filament can be rapidly stripped, serving a preheating function, and the core of the filament can be rapidly heated. Moreover, the protrusions 220 also increase the contact area between the filament and the heat conduction member 1, which is conducive to improving heat conduction efficiency. Therefore, the present invention can improve the melting speed of the filament to meet the requirements of high-speed printing.

In these embodiments, the difference from the above embodiments is that the cross-sectional area of the first sub-flow channel 111 is larger than the cross-sectional area of the second sub-flow channel 112. The larger cross-sectional area of the first sub-flow channel 111 enables the filament to flow more freely between the protrusions 220, which is conducive to more uniform heating of the filament and reduces the flow resistance of the stripped portion of the filament, ensuring that the preheated and stripped filament can smoothly enter the gap 212 and improving the stripping efficiency of the filament. The second sub-flow channel 112 serves as a flow path for the core of the filament, and the smaller cross-sectional area is more conducive to approaching the inner core of the filament, thereby accelerating the melting of the inner core of the filament.

In some optional embodiments, the cross-sectional shape of the first sub-flow channel 111 is configured to be circular. Of course, in other embodiments, the cross-sectional shape of the first sub-flow channel 111 can also be configured to be a five-pointed star shape, a three-pointed star shape, an elliptical shape, or the like.

As shown in FIG. 25 and FIG. 26, in some embodiments, the melting assembly further comprises a heatbreak 5 and a nozzle 6, the heatbreak 5 and the nozzle 6 are respectively connected to the heat conduction member 1, the heatbreak 5 is communicated with the flow channel 11, the nozzle 6 is communicated with the gap 212, and the heatbreak 5 and the nozzle 6 are disposed in an offset manner.

In these embodiments, the heatbreak 5 is a pipe connecting the heat conduction member 1 with other components, usually a narrow portion, and its function is to guide the filament into the heating flow channel 210 of the heat conduction member 1. The heat conduction member 1 is configured to heat the material to melt it for extrusion. The nozzle 6 is where the material is finally extruded, determining the shape and size of the extrudate. The flow channel 11 is a portion where the filament begins to be heated but has not yet been completely melted. The gap 212 is where the filament needs to be rapidly melted and prepared for extrusion. The gap 212 is connected to the nozzle 6, which means that at this stage, the material is very close to its molten state and is ready to be extruded. The offset arrangement of the heatbreak 5 and the nozzle 6 means that they are not in the same straight line in space, and this layout can be for optimizing the material flow path, reducing the overall length of the melting assembly, and facilitating the improvement of the torque resistance of the melting assembly.

Obviously, such a melting assembly design aims to improve the melting efficiency of the material and the structural strength.

As shown in FIG. 25 and FIG. 26, in some optional embodiments, the heatbreak 5, the flow channel 11, and the nozzle 6 extend in the same direction, and the gap 212 and the flow channel 11 are disposed perpendicular to each other. In these embodiments, through the above layout, the heatbreak 5, the flow channel 11, the gap 212, and the nozzle 6 can further reduce the length dimension of the melting assembly. Obviously, this is conducive to further improving the structural strength of the melting assembly.

Of course, in other embodiments, the gap 212 and the flow channel 11 can also be arranged in an intersecting manner, and the angle between the gap 212 and the flow channel 11 can be 10 degrees, 20 degrees, 30 degrees, 40 degrees, 50 degrees, 60 degrees, 70 degrees, 80 degrees, or the like.

It is worth mentioning that the flow channel 11 in the heat conduction member 1 and the gap 212 in the heat conduction member 1, the first connecting flow channel 12 in the heat conduction member 1 and the second flow guide portion 214 in the heat conduction member 1, and the second connecting flow channel 16 in the heat conduction member 1 and the first flow guide portion 213 in the heat conduction member 1 can all be arranged in the same manner.

The melting assembly for melting a 3D printing filament provided by the embodiments of the present invention has the gap 212 formed inside the heat conduction member 1. When the filament flows from the flow channel 11 into the gap 212, the gap 212 can press and heat the filament, and simultaneously the filament flows along the circumferential direction of the gap 212. The filament is subjected to greater pressure in the gap 212, so that the filament is compressed into a thinner shape. The cross-sectional area of the gap 212 is larger than the cross-sectional area of the filament, which increases the contact area between the filament and the heat conduction member 1. Moreover, the heat conduction effect on the core of the filament can be improved, which is conducive to improving heat transfer efficiency, thereby accelerating the overall melting speed of the filament. This design is particularly suitable for application scenarios requiring high-speed printing and can significantly improve printing speed and efficiency.

The heating structure provided by the embodiments of the present invention further discloses comparison examples between the gap 212 and the flow channel 11, as shown in Table 1 below.

**Table 1: Comparison examples of the gap 212 and the flow channel 11**

| No. | Gap 212 Spacing (mm) | Flow Channel 11 Diameter (mm) | Sheet Pressing Coefficient (Gap 212 Spacing / Flow Channel 11 Diameter) | Outlet Temperature (°C) | Inlet Pressure (MPa) | Contact Area (mm²) |
|---|---|---|---|---|---|---|
| 1 | 0.2 | 2 | 0.1 | 228.3 | 69.33 | 728.14 |
| 2 | 0.5 | 2 | 0.25 | 206 | 48.91 | 707.41 |
| 3 | 1 | 2 | 0.5 | 183 | 47.21 | 672.85 |
| 4 | 1.75 | 2 | 0.75 | 155 | 46.99 | 572.32 |
| 5 | / | 2 | / | 103 | 46.66 | 157.08 |

The gap 212 spacing can be understood as the distance between the two wall surfaces 2121; and the sheet pressing coefficient can be understood as the ratio of the gap 212 spacing to the diameter of the flow channel 11.

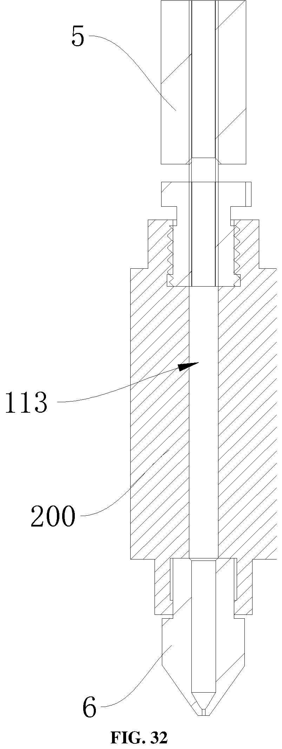

The comparison examples 1 to 4 are the melting assembly of the present invention provided in FIG. 6, and comparison example 5 is the melting assembly of the prior art provided in FIG. 32. Correspondingly, the melting assembly disclosed in the prior art, as shown in FIG. 32, comprises a heating structure, a heatbreak 5, and a nozzle. A columnar flow channel 113 is formed inside the body 200 of the heating structure. The heatbreak 5 is connected to the heating structure through the columnar flow channel 113. The nozzle is connected to the heating structure through the columnar flow channel 113.

The higher the outlet temperature, the greater the heating efficiency for the filament. The magnitude of the inlet pressure indicates the resistance and difficulty of the filament being pushed into the flow channel 11 by an external force. The greater the pressure, the greater the resistance experienced by the filament at the inlet, and the propulsion speed will be affected.

It can be understood that, when the inlet pressure does not change significantly, the smaller the width of the gap 212, the shorter the heat conduction distance from the center of the filament to the heat conduction member 1. It can thus be known that after the filament is pressed by the gap 212, the melting rate of the filament can be improved. At the same time, the outlet temperature can reflect the heating efficiency of the heat conduction member 1 on the filament. The higher the outlet temperature, the greater the heating efficiency for the filament.

The melting assembly of the prior art disclosed in No. 5 has a heating structure in which only the columnar flow channel 113 is provided, and therefore the gap 212 and the sheet pressing coefficient do not exist.

It can be seen from Table 1 that, when the diameters of the flow channel 11 and the columnar flow channel 113 remain unchanged, the temperature at the outlet 15 and the contact area of the filament in No. 5 are far smaller than those in Nos. 2 to 4, while the effect on the inlet pressure of the heating structure is not significant. At the same time, compared with the outlet temperature of No. 5, the outlet temperatures in Nos. 2 to 4 are all increased by multiples, which indirectly reflects that the heating efficiency of the filament is increased by multiples. Therefore, it can be known that the melting assembly provided in the present embodiment significantly improves the melting efficiency of the filament by providing the gap 212.

Furthermore, when the diameters of the flow channel 11 and the columnar flow channel 113 remain unchanged, No. 1 is provided with the gap 212, and the spacing of the gap 212 is 0.2. It can be known that the outlet temperature and the contact area of No. 1 are improved compared with those of No. 5. At the same time, compared with Nos. 2 to 4, the gap 212 of No. 1 is smaller than the gap 212 of Nos. 2 to 4. Since the gap 212 of No. 1 is too small, the inlet pressure of No. 1 is too large, which will lead to a relatively large overall propulsion resistance of the filament and poor flowability. Therefore, it can be known that although providing the gap 212 can improve the heating efficiency of the filament, if the gap 212 is set too small, it will lead to excessive inlet pressure, that is, poor overall flowability of the filament.

In some optional embodiments, the spacing range of the gap 212 is 0.2 mm to 1.75 mm, the diameter range of the flow channel 11 is 2 mm to 3 mm, and the ratio coefficient range of the sheet pressing coefficient is 0.1 to 0.75.

Further, it can be seen from Table 1 that the sheet pressing coefficient of No. 1 is 0.1, and the sheet pressing coefficient of No. 2 is 0.25. The outlet temperatures of the two do not change significantly, while the inlet pressure of No. 1 is much greater than that of No. 2, that is, the resistance experienced by the filament in No. 2 is smaller than that in No. 1.

At the same time, the sheet pressing coefficient of No. 2 is 0.25, and the sheet pressing coefficient of No. 3 is 0.5. The inlet pressures of the two do not change significantly, while compared with No. 5, the outlet temperature of No. 2 is increased by multiples, which indirectly reflects that the heating efficiency is increased by multiples. The contact area of the filament is expanded by approximately four times, the farthest heat conduction distance of the filament is shortened by four times, and the heating and melting efficiency of the filament is greatly improved.

Therefore, it can be known that setting the ratio coefficient of the sheet pressing coefficient in the range of 0.2 to 0.75 can greatly improve the heating and melting efficiency of the filament and facilitate the improvement of printing speed. Optionally, the ratio coefficient of the sheet pressing coefficient can be values such as 0.2, 0.25, 0.3, 0.4, ..., 0.6, 0.65, 0.7, 0.75.

In summary, the heating structure and melting assembly for melting a 3D printing filament disclosed in the embodiments of the present invention have, on one hand, the gap 212 being capable of increasing the flow distance of the filament in the body 200, that is, increasing the heating time. On the other hand, the heat conduction member 1 presses the filament through the gap 212, which can reduce the thermal contact distance of the core of the filament. At the same time, compared with a linear flow channel, providing the gap 212 can also increase the thermal contact area of the filament, which is conducive to improving the melting rate of the filament.

The gap 212 is enclosed by the inner wall of the heat conduction member 1 and the outer wall of the insertion member 2, so as to form annular, semi-annular gap surfaces and the like. Compared with a planar gap surface, the annular or semi-annular gap surface can provide a larger thermal contact surface for the filament. The gap 212 is disposed along the horizontal direction, that is, intersects the axes of the flow channel 11 and the outlet 15 perpendicularly, which is conducive to controlling the overall length of the melting assembly, thereby facilitating the control of the stability of the melting assembly during the printing process. The gap 212 cooperates with the multi-channel preheating flow channel 11 to strip the outer surface of the filament, which can achieve separate preheating of the inner core, reduce the influence of the material on the outer surface of the filament on the heating of the inner core, improve the heating effect of the heat conduction member 1 on the filament, improve the heating efficiency of the filament, and further improve the overall melting speed of the filament. The auxiliary arrangement of the transition flow channel 13 and the flow guide portion can make the flow of the filament in the heating structure smoother and reduce the resistance of the filament passing through the heating structure.

The above descriptions are only embodiments of the present invention and are not intended to limit the protection scope of the present invention. For those skilled in the art, various modifications and changes can be made to the present invention. Any modifications, equivalent replacements, improvements, and the like made within the spirit and principles of the present invention shall be included in the protection scope of the present invention.

The above is only the specific implementation manner of the present invention, but the protection scope of the present invention is not limited thereto. Any person skilled in the art can easily conceive of changes or replacements within the technical scope disclosed by the present invention, which shall be covered by the protection scope of the present invention. Therefore, the protection scope of the present invention shall be subject to the protection scope of the claims.

It should be noted that in the present text, relational terms such as first and second are only used to distinguish one entity or operation from another entity or operation, and do not necessarily require or imply that there is any such actual relationship or sequence between these entities or operations. Moreover, the terms "comprise," "include," or any other variant thereof is intended to cover a non-exclusive inclusion, so that a process, method, article, or device comprising a series of elements not only comprises those elements but also comprises other elements not explicitly listed, or further comprises elements inherent to such process, method, article, or device. Without more limitations, an element defined by the statement "comprises one ..." does not exclude the existence of additional identical elements in the process, method, article, or device comprising the element.

### INDUSTRIAL APPLICABILITY

Through the technical solution of the present invention, by providing the gap, on one hand, the flow distance of the filament in the body can be increased, that is, the heating time is prolonged. On the other hand, the heat conduction member presses the filament through the gap, which can reduce the thermal contact distance of the core of the filament. At the same time, compared with a linear flow channel, the gap can also increase the thermal contact area of the filament, which is conducive to improving the melting rate of the filament and meeting the demand for rapid printing.

## Claims

1. A melting assembly for melting a 3D printing filament, **characterized in that** the melting assembly comprises:
a heat conduction member, wherein at least one flow channel configured to guide a filament is provided inside the heat conduction member, an accommodating groove is further provided in the heat conduction member, and the accommodating groove is communicated with the flow channel; and
an insertion member, disposed in the accommodating groove and connected to the heat conduction member,
wherein a first gap configured to press the filament is provided between at least part of the insertion member and a peripheral wall of the accommodating groove.

2. The melting assembly according to claim 1, wherein the heat conduction member is further provided with an outlet configured to guide the pressed filament to flow out, an axis of the outlet and an axis of the flow channel are disposed in a mutually offset manner; or
an axis of the outlet and an axis of the flow channel are disposed coaxially.

3. The melting assembly according to claim 2, wherein an axis of the accommodating groove and the axis of the flow channel are disposed at an angle.

4. The melting assembly according to any one of claims 1 to 3, wherein the insertion member comprises an insertion section configured to be inserted into the accommodating groove, and at least part of the insertion section and a groove wall of the accommodating groove form the gap; and
the insertion section abuts against one end of the accommodating groove; or the insertion section is spaced apart from one end of the accommodating groove.

5. The melting assembly according to any one of claims 1 to 4, wherein the flow channel comprises at least two first sub-flow channels and one second sub-flow channel, the first sub-flow channels are disposed along a circumferential direction of the second sub-flow channel, and
a cross-sectional area of the second sub-flow channel is smaller than a cross-sectional area of the first sub-flow channel.

6. The melting assembly according to claim 5, wherein the first sub-flow channels are communicated with the second sub-flow channel.

7. The melting assembly according to any one of claims 1 to 6, wherein the melting assembly further comprises a heating sheet, and the heating sheet is attached to an outer surface of the heat conduction member.

8. The melting assembly according to any one of claims 1 to 7, wherein a plurality of flow channels are provided.

9. The melting assembly according to any one of claims 2 to 8, wherein the insertion member is a heating rod.

10. A melting assembly, **characterized in that** the melting assembly comprises:
a heat conduction member, wherein the heat conduction member is provided with a through-type heating flow channel configured to convey a filament, the heating flow channel has a preheating flow channel and a flow channel, and the preheating flow channel and the flow channel are sequentially communicated in a conveying direction,
wherein the flow channel has a pair of wall surfaces disposed opposite to each other, a distance between the pair of wall surfaces is smaller than a diameter of the filament, and a cross-sectional area of the flow channel is larger than a cross-sectional area of the filament.

11. The melting assembly according to claim 10, wherein at least one end of the flow channel is provided with a guide hole channel, and the guide hole channel is configured to guide the filament through the heating flow channel.

12. The melting assembly according to claim 10 or 11, wherein the wall surfaces and an extending direction of the preheating flow channel are disposed in an intersecting manner.

13. The melting assembly according to claim 10 or 11, wherein the wall surfaces and an extending direction of the preheating flow channel are disposed in a parallel manner.

14. The melting assembly according to any one of claims 10 to 13, wherein in the conveying direction, the preheating flow channel has a guide section and a stripping section connected in sequence, and the stripping section is communicated with the flow channel, wherein a cross-sectional area of the guide section gradually decreases in the conveying direction.

15. The melting assembly according to claim 14, wherein an inner wall of the preheating flow channel has a plurality of protrusions, the plurality of protrusions are spaced apart from each other along a circumferential direction of the preheating flow channel, and the protrusions extend along the conveying direction; a first sub-flow channel is formed between adjacent protrusions, and a second sub-flow channel is formed between end portions of all the protrusions facing away from the inner wall of the preheating flow channel; and a cross-sectional area of the second sub-flow channel gradually decreases; and
a minimum cross-sectional area of the second sub-flow channel is smaller than a cross-sectional area of the filament, and/or a cross-sectional area of the first sub-flow channel is larger than the cross-sectional area of the second sub-flow channel.

16. A heating structure for melting a 3D printing filament, **characterized in that** the heating structure comprises: a body, a flow channel, a gap, and an outlet;
the flow channel, the gap, and the outlet are all disposed inside the body and are sequentially communicated; and
a spacing of the gap is smaller than a diameter of the filament, and the filament enters the body from the flow channel, is pressed into a sheet shape at the gap, and flows out of the body from the outlet.

17. The heating structure according to claim 16, wherein the gap comprises a first wall surface and a second wall surface, and the first wall surface and the second wall surface are formed by an inner wall of the body.

18. The heating structure according to claim 17, wherein the body comprises a heat conduction member and an insertion member, the heat conduction member has an accommodating groove, the insertion member is inserted into the accommodating groove and is sealingly connected to the heat conduction member, and the first wall surface and the second wall surface are formed by an inner wall of the accommodating groove and an outer wall of the insertion member.

19. The heating structure according to claim 17 or 18, wherein a spacing between the first wall surface and the second wall surface is 0.2 to 0.75 times the diameter of the filament.

20. The heating structure according to any one of claims 16 to 19, wherein at least a portion of the first wall surface and the second wall surface is a rectangular plane, an elliptical plane, a rounded rhombic plane, a polygonal plane, an annular surface or a semi-annular surface.

21. The heating structure according to claim 20, wherein the first wall surface and the second wall surface are rounded rhombic planes, the flow channel and the outlet are respectively located at diagonal positions of the rounded rhombic planes, and are perpendicular to the rounded rhombic planes.

22. The heating structure according to any one of claims 16 to 21, wherein the heating structure further comprises a flow guide portion, and the flow guide portion is disposed between the flow channel and the gap; and/or
the flow guide portion is disposed between the gap and the outlet.

23. The heating structure according to any one of claims 16 to 22, wherein the flow channel is configured to preheat the filament, the flow channel comprises a first sub-flow channel and a second sub-flow channel, the first sub-flow channel is communicated with the second sub-flow channel, and the first sub-flow channel is disposed along a circumferential direction of the second sub-flow channel.

24. The heating structure according to claim 23, wherein the flow channel further comprises a transition flow channel, the first sub-flow channel and the second sub-flow channel are both communicated with the transition flow channel, and the filament enters the first sub-flow channel and the second sub-flow channel from the transition flow channel.

25. A melting assembly for melting a 3D printing filament, **characterized in that** the melting assembly comprises the heating structure according to any one of claims 16 to 24, and further comprises a heatbreak and a nozzle; the heatbreak is connected to the body through the flow channel; and the nozzle is connected to the outlet to be connected to the body.

26. A 3D printer, **characterized in that** the 3D printer comprises: the melting assembly according to any one of claims 1 to 5; or
the melting assembly according to any one of claims 10 to 15; or
the melting assembly according to claim 25.
